# EUROPEAN PATENT APPLICATION

(11) **EP 4 726 429 A1**
(43) Date of publication of application: **15.04.2026**
(21) Application number: 24906345.4
(22) Date of filing: 17.12.2024
(51) Int. Cl.: G01S 7/481

(54) **DETECTION ASSEMBLY, RECEIVING MODULE, DETECTION APPARATUS, AND TERMINAL DEVICE**

(30) Priority: 19.12.2023 CN 202311759391
(71) Applicant: Shenzhen Yinwang Intelligent Technologies Co., Ltd., Shenzhen, Guangdong 518110 (CN)
(72) Inventor: WANG, Lei, Shenzhen, Guangdong 518129 (CN); ZHANG, Yao, Shenzhen, Guangdong 518129 (CN); ZHU, Yadan, Shenzhen, Guangdong 518129 (CN); WANG, Shuai, Shenzhen, Guangdong 518129 (CN); LI, Tianyu, Shenzhen, Guangdong 518129 (CN)
(74) Representative: Gill Jennings & Every LLP
(86) International application number: PCT/CN2024/139937
(87) International publication number: WO 2025/130865

(57) **Abstract**

A detection component (400), a receive module, a detection apparatus, and a terminal device are disclosed, and relate to the field of radar technologies, to reduce a blind spot distance. The detection component (400) includes a first detection region (410) and a second detection region (420). The first detection region (410) is used to receive a first echo signal in a first field of view, and the second detection region (420) is used to receive a second echo signal in a second field of view. The first field of view and the second field of view at least partially do not overlap. Two detection regions are disposed, so that two receive fields of view and a transmit field of view form different overlapping regions. One overlapping region is at a short-range overlapping position, and the other overlapping region is at a long-range overlapping position. A detection region at the long-range overlapping position may be used for long-range target detection, and the detection region at the short-range overlapping position may be used for short-range blind spot detection. The two detection regions complement each other, so that long-range detection and short-range blind spot detection can be simultaneously implemented. This effectively reduces the blind spot distance of the detection component (400).

## Description

### CROSS-REFERENCE TO RELATED APPLICATIONS

This application claims priority to Chinese Patent Application No. 202311759391.0, filed with the China National Intellectual Property Administration on December 19, 2023 and entitled "DETECTION COMPONENT, RECEIVE MODULE, DETECTION APPARATUS, AND TERMINAL DEVICE", which is incorporated herein by reference in its entirety.

### TECHNICAL FIELD

This application relates to the field of detection technologies, and in particular, to a detection component, a receive module, a detection apparatus, and a terminal device.

### BACKGROUND

With development of science and technology, smart terminals such as smart transportation devices, smart home devices, industrial devices, robots, and vehicles are gradually introduced into people's daily life. A lidar can sense an ambient environment, then, can recognize and track a moving target based on the sensed environment, and can perform path planning and the like based on a navigator, map data, and the like. Therefore, the lidar is gradually used in the smart terminals, and plays an increasingly important role.

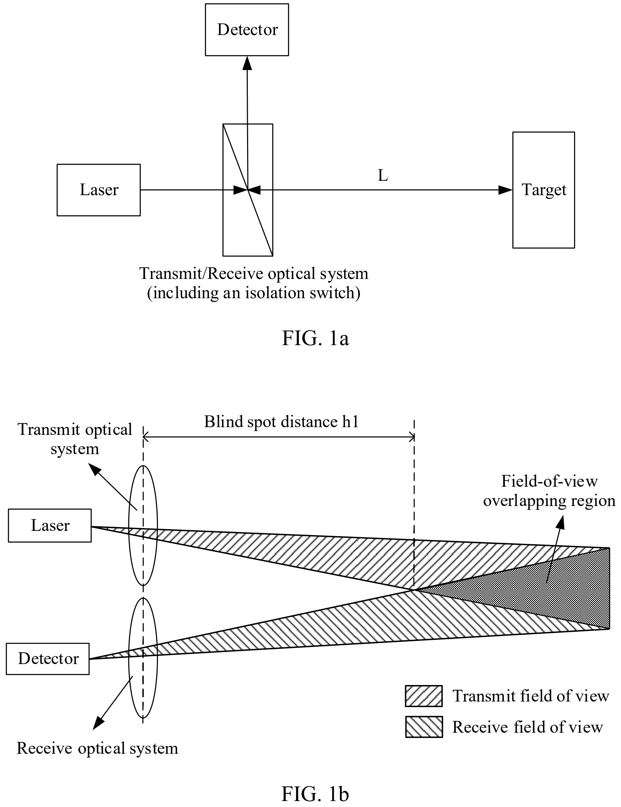

Currently, the lidar may be classified into a combined transceiver lidar and a separate transceiver lidar based on whether a transmit optical path and a receive optical path are coaxial. As shown in FIG. 1a, the combined transceiver lidar transmit a laser and receive an echo by using a same optical system. Transmit and receive optical paths of the combined transceiver lidar are located on a same optical axis L, and there is no detection blind spot. However, to separate a transmit signal from an echo signal, an isolation switch needs to be additionally disposed. Consequently, an echo loss is large, and utilization of echo energy is low. Compared with the combined transceiver lidar, as shown in FIG. 1b, the separate transceiver lidar may directly separate a transmit signal from an echo signal by using a transmit optical system and a receive optical system that are independent of each other, and there is no need to dispose an isolation switch. This can improve utilization of echo energy. However, transmit and receive fields of view of the separate transceiver lidar start to overlap at a long distance (namely, a blind spot distance h1). A field-of-view overlapping region is within a detector-detectable distance range, and a region outside the field-of-view overlapping region is a detection blind spot of the detector. A longer blind spot distance indicates worse detection performance of the separate transceiver lidar on a short-range target, and therefore brings a challenge to implementing high detection performance of the separate transceiver lidar.

In conclusion, how to reduce the blind spot distance is a technical problem that needs to be urgently resolved for the separate transceiver lidar.

### SUMMARY

This application provides a detection component, a receive module, a detection apparatus, and a terminal device, to reduce a blind spot distance.

According to a first aspect, this application provides a detection component, including a first detection region and a second detection region. The first detection region is used to receive a first echo signal in a first field of view, and the second detection region is used to receive a second echo signal in a second field of view. The first field of view and the second field of view at least partially do not overlap.

In the foregoing solution, two detection regions are disposed, so that two receive fields of view corresponding to the two detection regions and a transmit field of view form different overlapping regions. One overlapping region is at a short-range overlapping position, and the other overlapping region is at a long-range overlapping position. A detection region at the long-range overlapping position may be used for long-range target detection, and the detection region at the short-range overlapping position may be used for short-range blind spot detection. The two detection regions complement each other, so that long-range detection and short-range blind spot detection can be simultaneously implemented. This effectively reduces a blind spot distance of the detection component. In addition, the two detection regions both are configurations on a receive side, and do not affect transmit and receive optical paths. Therefore, in this solution, the blind spot distance can be reduced while an increase in stray light is avoided as much as possible. This improves detection performance of the detection component.

In a possible design, a detection distance range of the first field of view is different from a detection distance range of the second field of view. In this way, a minimum detection distance of the first field of view may be different from a minimum detection distance of the second field of view, and a field of view corresponding to the minimum detection distance less than another minimum detection distance may be used for blind spot detection in another field of view.

In a possible design, a part or all of detection units in the first detection region and a part or all of detection units in the second detection region are simultaneously activated, or are activated in different frames, or are activated in different slots in a same frame. When the part or all of detection units in the first detection region and the part or all of detection units in the second detection region are activated simultaneously, long-range detection and short-range blind spot detection can be simultaneously implemented. When the part or all of detection units in the first detection region and the part or all of detection units in the second detection region are activated in different frames or in different slots in the same frame, long-range detection and short-range blind spot detection can be alternately implemented. A plurality of activation modes are configured, so that a required activation mode can be flexibly selected based on an actual scenario. In this way, the detection component is applicable to more scenarios.

In a possible design, the first detection region and the second detection region belong to different detectors. For example, the detector may be an array detector, for example, a silicon photomultiplier (silicon photomultiplier, SiPM) or a single-photon avalanche diode (single-photon avalanche diode, SPAD), or may be a non-array detector, for example, an avalanche photodiode (avalanche photodiode, APD) or a pin photoelectric detector.

In the foregoing design, two detectors are disposed, where one detector may be used as a main detector, and the other detector may be used as a blind spot detector. In this way, long-range detection and blind spot detection can be separately controlled only by activating or deactivating the main detector or the blind spot detector, and there is no need to improve original structures of the detectors. Therefore, development difficulty is low.

In a possible design, the first detection region and the second detection region belong to different detection regions in a same detector. For example, the detector may be an array detector, for example, a SiPM or a SPAD. The first detection region includes a partial region in the array detector, and the second detection region includes another partial region in the array detector.

In the foregoing design, an echo signal is received by combining different regions in the array detector. One region may be used for long-range detection, and the other region may be used for short-range blind spot detection. In this way, long-range detection and blind spot detection can be simultaneously implemented by using different regions in the same detector, and there is no need to introduce a new detector. This can reduce a size and costs of the detection component.

In a possible design, an operating mode of the detection component is row scanning, and the first detection region and the second detection region are located in different rows in the detector; or an operating mode of the detection component is column scanning, and the first detection region and the second detection region are located in different columns in the detector. In this way, a position relationship between the two detection regions can match the operating mode of the detection component.

In a possible design, the detection units activated in the first detection region or the second detection region occupy a length of one row or one column in the detector, or occupy a length of half a row or half a column in the detector, or occupy a length of a part of one row or a part of one column in the detector. According to this design, the first detection region or the second detection region supports a plurality of disposing manners on the detector. In this way, a manner may be flexibly selected for configuration based on an actual scenario requirement, to meet an actual detection requirement.

In a possible design, the detection units activated in the first detection region and the detection units activated in the second detection region separately occupy one row or one column in the detector, or separately occupy half a row or half a column in the detector. In this way, the first detection region and the second detection region have regular positions and regions on the detector, so that the two detection regions can be switched from an activated state to a deactivated state or from a deactivated state to an activated state.

In a possible design, the operating mode of the detection component is row scanning, the first detection region occupies one row in the detector, the second detection region occupies a part of each row in at least one row in the detector, and occupied parts do not duplicate in columns; or the operating mode of the detection component is column scanning, the first detection region occupies one column in the detector, the second detection region occupies a part of each column in at least one column in the detector, and occupied parts do not duplicate in rows. In this way, when the second detection region is activated, only one detection unit used for blind spot detection is engaged in photosensitivity in each column (or row), to ensure accurate positioning of a blind spot detection signal in each column (or row) and adapt to the column scanning (or row scanning) operating mode.

In a possible design, the operating mode of the detection component is row scanning, the detection units activated in the first detection region and the detection units activated in the second detection region are located in different columns, and occupy a length of one row in the detector in total; or the operating mode of the detection component is column scanning, the detection units activated in the first detection region and the detection units activated in the second detection region are located in different rows, and occupy a length of one column in the detector in total. In this way, it can be ensured that only one of a detection unit used for long-range detection and a detection unit used for blind spot detection is activated in a column (or row) at a same moment. This helps maintain accurate positioning of a readout signal in each column (or row) and adapt to a processing capability of a processing chip.

In a possible design, the second detection region includes a plurality of subregions, and the plurality of subregions are discontinuous. In this case, detection units used for blind spot detection do not cover all columns (or rows), and some columns (or rows) are idle. In this way, processing resources in some columns can be saved while partial blind spot detection is implemented, to adapt to a limited processing capability of a processing chip.

**In** a possible design, the second detection region may be located on one side or two opposite sides of the first detection region. In this way, the detection units located on one side or two sides of the first detection region on the detector can be used to implement one-direction or two-direction blind spot detection.

**In** a possible design, a quantity and positions of detection units activated in the second detection region are configured based on a region of interest. In this way, the detection units in the second detection region can detect a target in the region of interest, to implement precise positioning of the target in the region of interest.

According to a second aspect, this application provides a receive module, including the detection component according to any one of the first aspect or the designs of the first aspect, so that the receive module can have the beneficial effects in the first aspect.

In a possible design, the receive module may further include a receive optical system. The receive optical system is configured to transmit an echo signal to the detection component. Optionally, the receive optical system may first collimate the echo signal, and then transmit the echo signal to the detection component, so that the echo signal can be vertically irradiated onto the detection component. This improves efficiency of receiving the echo signal by the detection component.

According to a third aspect, this application provides a detection apparatus, including the receive module according to any one of the second aspect or the designs of the second aspect.

In a possible design, the detection apparatus may further include a transmit module. The transmit module is configured to transmit a detection signal.

In a possible design, the detection apparatus may further include a processing module. The processing module is configured to process an echo signal to obtain association information of a target.

According to a fourth aspect, this application provides a terminal device, including the detection apparatus according to any one of the third aspect or the designs of the third aspect.

For technical effect that can be achieved in the second aspect to the fourth aspect, refer to descriptions of beneficial effect in the first aspect. Details are not described herein again.

### BRIEF DESCRIPTION OF DRAWINGS

FIG. 1a is an example diagram of a structure of a combined transceiver lidar;
FIG. 1b is an example diagram of a structure of a separate transceiver lidar;
FIG. 1c is an example diagram of a structure of an array detector;
FIG. 2 is an example diagram of a possible application scenario according to this application;
FIG. 3a is an example diagram of a structure of a dual-laser separate transceiver lidar according to the industry;
FIG. 3b is an example diagram of a structure of a separate transceiver lidar to which a blind spot detection structure is added according to the industry;
FIG. 4 is an example diagram of a structure of a detection component according to this application;
FIG. 5 is an example diagram of an overlapping relationship between fields of view corresponding to detection regions according to this application;
FIG. 6 is an example diagram of a structure of a detection component according to an implementation solution 1;
FIG. 7a is an example diagram of an activation time sequence according to this application;
FIG. 7b is an example diagram of another activation time sequence according to this application;
FIG. 7c is an example of another activation time sequence according to this application;
FIG. 8 is an example diagram of a structure of a detection component according to an implementation solution 2;
FIG. 9a is an example diagram of an array structure of a detector corresponding to a row scanning mode according to this application;
FIG. 9b is an example diagram of an array structure of a detector corresponding to a column scanning mode according to this application;
FIG. 10a is an example diagram of a manner of disposing a detection region according to this application;
FIG. 10b is an example diagram of another manner of disposing a detection region according to this application;
FIG. 11a is an example diagram of another manner of disposing a detection region according to this application;
FIG. 11b is an example diagram of another manner of disposing a detection region according to this application;
FIG. 11c is an example diagram of another manner of disposing a detection region according to this application;
FIG. 12a is an example diagram of another manner of disposing a detection region according to this application;
FIG. 12b is an example diagram of another manner of disposing a detection region according to this application;
FIG. 12c is an example diagram of another manner of disposing a detection region according to this application;
FIG. 13a is an example diagram of another manner of disposing a detection region according to this application;
FIG. 13b is an example diagram of another manner of disposing a detection region according to this application;
FIG. 13c is an example diagram of another manner of disposing a detection region according to this application;
FIG. 14 is an example schematic flowchart of alternately activating detection regions according to this application;
FIG. 15a is an example schematic flowchart of simultaneously activating detection regions according to this application;
FIG. 15b is another example schematic flowchart of simultaneously activating detection regions according to this application;
FIG. 15c is another example schematic flowchart of simultaneously activating detection regions according to this application;
FIG. 16a is another example schematic flowchart of simultaneously activating detection regions according to this application;
FIG. 16b is another example schematic flowchart of simultaneously activating detection regions according to this application; and
FIG. 17 is an example diagram of an architecture of a detection apparatus according to this application.

### DESCRIPTION OF EMBODIMENTS

The following describes embodiments of this application in detail with reference to the accompanying drawings.

Some terms in this application are described below. It should be noted that these explanations are for ease of understanding by a person skilled in the art, and are not intended to limit the protection scope claimed by this application.

### 1. Transmit field of view (transmit field of view, T-FOV) and receive field of view (receive field of view, R-FOV)

The transmit field of view may be understood as a field of view range covered by a laser signal sent by a laser in a detection region. Generally, the laser signal spreads in a conical shape with the laser as a center. Therefore, the transmit field of view is in the conical shape in space, and may be in a triangular shape on a side surface, as shown in FIG. 1b.

A receive field of view may be understood as a field of view range covered by an echo signal that can be received by a detector and that is in a detection region. Only a detection unit activated in the detector can receive the echo signal. Therefore, the receive field of view may alternatively be considered as a coverage range of the echo signal that can be received by the detection unit activated in the detector. The coverage range is usually also in a conical shape in space and in a triangular shape on a side surface, as shown in FIG. 1b.

### 2. Slot

The slot is short for a beam position or a beam center position. A lidar usually needs a plurality of slots for one frame of detection in detection space. A quantity of slots is related to an angle range of one scan of a scanning component. For example, a pitch range of the lidar is 0° to 20°, and an angle range of one scan of the scanning component is 5°. In this case, the scanning component needs to rotate at least four times to cover the entire pitch range, in other words, four slots are required. A laser emits a plurality of laser signals within each slot to detect a region corresponding to the current slot. After the detection is completed, a next slot is switched to (for example, the scanning component changes a scanning angle to implement slot switching), and the laser emits a plurality of laser signals again to detect a region corresponding to the next slot. The process is repeated until detection on an entire detection region is completed.

### 3. Detection unit

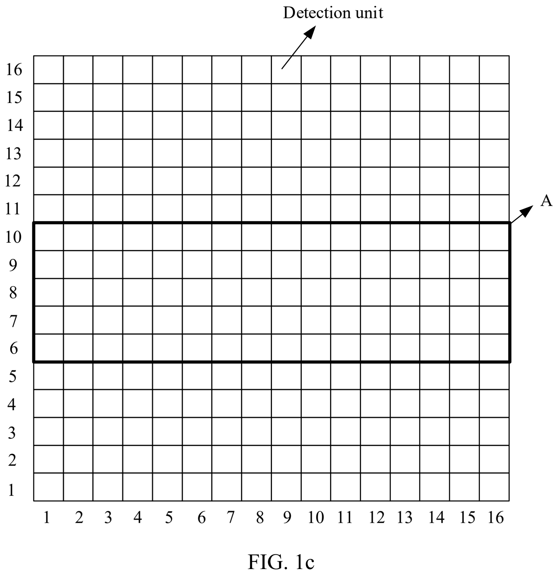

The detection unit, also referred to as a detection pixel or a photosensitive unit, is a minimum unit configured to receive an echo signal in an array detector, as shown in FIG. 1c. The array detector is an array structure including a plurality of rows and a plurality of columns of detection units. Generally, only some detection units in the array detector are used as readout units, and the other detection units are not used for readout. For example, in a column scanning mode, although the array detector shown in FIG. 1c includes 16 rows of detection units, but only the sixth to tenth rows of detection units shown in a middle region A may be used as readout rows, and the other rows are not used for readout and are rows additionally disposed in the array detector. These additionally disposed rows are usually used as calibration rows to ensure that the array detector can be used in different lidar scenarios. For example, due to different detection scenarios or due to manufacturing errors and mounting errors in a same detection scenario, echo signals corresponding to different lidars may be focused on different rows in the array detector. For example, echo signals corresponding to a lidar (lidar 1) are focused on the sixth to tenth rows in the array detector, and echo signals corresponding to another lidar (lidar 2) are focused on the fourth to eighth rows in the array detector. In this case, when the array detector is used in the lidar 1, detection units in the sixth to tenth rows in the array detector may be used as readout rows, or when the array detector is used in the lidar 2, detection units in the fourth to eighth rows in the array detector may be used as readout rows. In addition, the calibration rows may be further used to calibrate readout rows in a same lidar. For example, as use duration of the lidar increases, the lidar may encounter a change in a detection scenario, an optical element shifts, or the like, causing a change in a position focused by echo signals. Therefore, an echo test may be performed periodically in combination with the calibration rows and the current read rows, to determine rows focused by the current echo signals on the array detector, and then update the rows to the readout rows. For example, if a region on which the echo signals are focused changes to the eighth to 12th rows after a period of time, instead of the previous sixth to tenth rows, the readout rows may be modified to the eighth to 12th rows, and remaining rows are used as new calibration rows, to perform a next calibration operation in combination with the new readout rows. It may be understood that the additionally disposed detection units may further have some other functions. This is not specifically limited in this application.

For ease of subsequent description, detection units used for readout are named as a first part of detection units, and detection units not used for readout are named as a second part of detection units. During use of the array detector, the second part of detection units are not activated (or do not operate, or are not turned on), and any one of the first part of detection units may be activated (or operate, or be turned on), or may not be activated. Whether the detection unit is activated may be determined based on an operating mode of a lidar. For details, refer to the following descriptions. The activated detection unit may receive an echo signal and convert the echo signal into an electrical signal, but the deactivated detection unit does not convert the echo signal into an electrical signal regardless of whether the echo signal arrives in the deactivated detection unit.

### 4. Operating mode of a lidar

Operating modes of a scanning lidar may include row scanning and column scanning. When the lidar operates in the row scanning mode, a laser emits a horizontal line beam, and a scanning component scans the horizontal line beam row by row in a vertical angle range (the horizontal line beam may be emitted for a plurality of times at each angle). The horizontal line beam each time should be focused on a row of detection units in the detector. Therefore, the detector may activate the row of detection units to perform target detection, point cloud construction, or the like based on information about an echo signal received in the row of detection units. Similarly, when the lidar operates in the column scanning mode, the laser emits a vertical line beam, and the scanning component scans the vertical line beam column by column in a horizontal angle range (the vertical line beam may be emitted for a plurality of times at each angle). Therefore, the detector may activate a column of detection units to perform target detection, point cloud construction, or the like based on information about an echo signal received in the column of detection units.

The foregoing describes some terms used in this application, and the following describes possible application scenarios of this application.

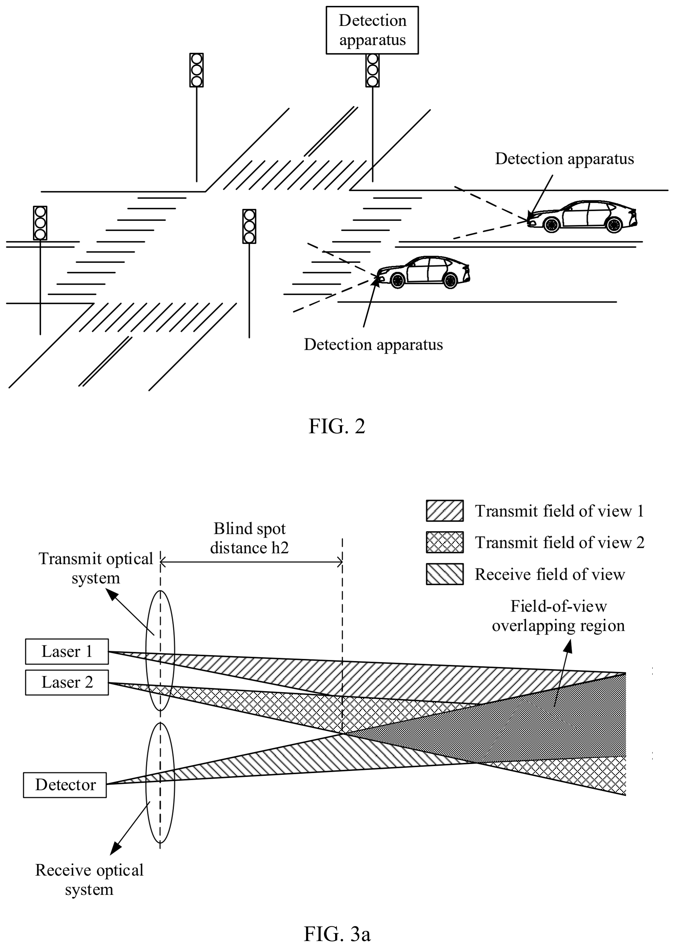

In a possible implementation, the detection component provided in this application may be integrated into a receive module, the receive module may be integrated into a detection apparatus, and the detection apparatus may be mounted on a vehicle. For example, the detection apparatus may include but is not limited to a lidar. FIG. 2 shows an example diagram of a possible application scenario according to this application. In the application scenario, an example in which the detection apparatus is mounted on a head bumper of a vehicle is used. It may be understood that the detection apparatus may alternatively be mounted at another position of the vehicle, for example, any one or more positions such as around a vehicle light, around a rearview mirror, near a vehicle door, at a rear bumper, behind a windshield, or on a vehicle roof, to capture ambient environment information of the vehicle. When the detection apparatus is mounted behind the windshield, the detection apparatus has a low requirement on a risk of no gravel collision, and does not affect an appearance of the vehicle. In addition, a front windshield has a window heating and defogging function and a wiper cleaning function.

For example, the detection apparatus is mounted in the vehicle. Refer to FIG. 2. An operating principle of the detection apparatus is as follows: The detection apparatus emits a beam to a detection region; and if there is a target in the detection region, the target may reflect the received beam back to the detection apparatus (which may also be referred to as an echo signal), and the detection apparatus determines association information of the target based on the echo signal. Specifically, the detection apparatus may obtain, in real time or periodically, longitude and latitude, a speed, and an orientation of the vehicle, or association information (for example, a distance of the target, a speed of the target, and/or a posture of the target) of the target (for example, another surrounding vehicle, a pedestrian, or an obstacle) in a specific range. Further, optionally, the detection apparatus may send the obtained information to a control apparatus or the like in the vehicle, so that the control apparatus performs path planning, braking, starting, or the like of the vehicle based on the obtained information. For example, a position of the vehicle may be determined by using the longitude and the latitude, or a traveling direction and a destination of the vehicle in a future period of time are determined by using the speed and the orientation, or a quantity and density of obstacles around the vehicle are determined by using a distance from a surrounding object. Further, optionally, assisted driving, autonomous driving, or the like of the vehicle may be further implemented in combination with a function of an advanced driver assistance system (advanced driver assistance system, ADAS).

It should be understood that the foregoing application scenario is merely an example. The detection apparatus (including the detection component provided in this application) provided in this application may be further used in another possible scenario, and is not limited to the scenario in the foregoing example. For example, the detection apparatus may alternatively be mounted on a road side unit (road side unit, RSU), and serve as a road side traffic detection apparatus, to implement intelligent vehicle-road collaborative communication and the like. For another example, the detection apparatus may alternatively be used in another transportation means, and serve as an information collection source for path planning, to assist a driver in implementing safe driving or to automatically implement safe driving. The another transportation means may include but is not limited to a ship, an airplane, an uncrewed aerial vehicle, a train, a subway, an automated guided vehicle (automated guided vehicle, AGV), an unmanned transport vehicle, or the like. For another example, the detection apparatus may alternatively be used in a terminal device or a component disposed in the terminal device. The terminal device may be, for example, a smartphone, a smart home device, a smart manufacturing device, a medical device, an industrial device, or a robot. Examples are not enumerated herein. It should be noted that the application scenarios described in this application are intended to describe the technical solutions in this application more clearly, and do not constitute a limitation on the technical solutions provided in this application.

In addition, the foregoing application scenarios may be applied to fields such as self-driving, assisted driving, intelligent driving, autonomous driving, a connected vehicle, optical communication, security surveillance, biomedicine, surveying and mapping (for example, three-dimensional drawing and remote sensing and mapping), meteorological research, biomass and vegetation research, air quality monitoring, and aviation and aerospace applications.

As described in the background, because receive and transmit fields of view of the separate transceiver lidar overlap at a long distance, a blind spot distance is long. Consequently, the separate transceiver lidar has poor detection performance on a short-range target, and even cannot detect the short-range target.

To resolve the foregoing problem, in some solutions, it is considered that a blind spot detection laser source or a blind spot detection structure is added to a transmit optical path of the separate transceiver lidar, to change a transmit field of view, and further change an overlapping region between the transmit field of view and a receive field of view, so as to reduce a blind spot distance. Examples are described below.

In a solution 1, FIG. 3a is a diagram of a structure of a dual-laser separate transceiver lidar. Two lasers, namely, a laser 1 and a laser 2, are provided in the structure. The laser 1 may be considered as a laser in a conventional separate transceiver lidar, for example, the laser shown in FIG. 1b. The laser 2 may be considered as an added blind spot detection laser, and is disposed between the laser 1 and a detector. According to this design, a transmit field of view of the separate transceiver lidar is changed to a combination of a transmit field of view 1 of the laser 1 and a transmit field of view 2 of the laser 2. The two transmit fields of view 1 and 2 overlap a receive field of view at a more forward position, an overlapping region is larger, and a blind spot distance h2 is less than a blind spot distance h1 of the conventional separate transceiver lidar shown in FIG. 1b. In this way, short-range blind spot detection can be implemented. However, the additional lasers obviously increase transmit power consumption of the lidar, resulting in a higher requirement of a lidar system for heat dissipation. In addition, more stray light may be introduced due to additional transmit beams, affecting detection performance.

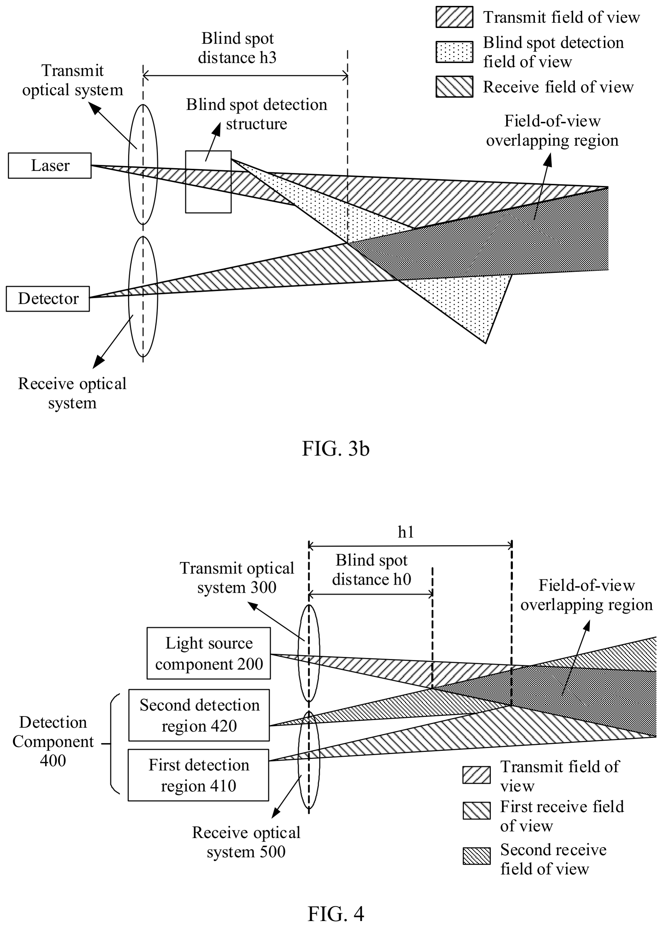

In a solution 2, FIG. 3b is a diagram of a structure of a separate transceiver lidar to which a blind spot detection structure is added according to the industry. In this structure, a blind spot detection structure is added behind a transmit optical system. The blind spot detection structure is used to split light emitted by a laser, so that a part of the light constitutes a blind spot detection field of view, and the other part of the light continues to serve as a transmit field of view to detect a target. A position at which the blind spot detection field of view overlaps a receive field of view is ahead of a position at which the transmit field of view overlaps the receive field of view, so that a blind spot distance h3 in the structure can be less than the blind spot distance h1 shown in FIG. 1b. However, the additional blind spot detection structure also increases transmit power consumption of the lidar, resulting in a higher requirement of a lidar system for heat dissipation. In addition, existence of the blind spot detection structure causes splitting of a main detection optical path, affecting a range of a main detection field of view, and stray light may be additionally introduced into the main detection optical path, affecting effective detection on a target by the main detection optical path.

In conclusion, although the two solutions provided by the industry can reduce the blind spot distance, another optical element needs to be provided in the transmit optical path, which increases the power consumption of the lidar, and introduces more stray light, affecting long-range detection of the lidar. In other words, the solution of changing the transmit field of view to reduce the blind spot distance still has many disadvantages, and another manner needs to be explored to perform system blind spot detection.

In view of this, this application provides a detection component. Two detection regions are disposed, so that one detection region can be used for blind spot detection in the other detection region, to reduce a system detection blind spot without affecting a transmit optical path and avoiding stray light.

The following specifically describes the detection component and the detection apparatus provided in this application with reference to specific accompanying drawings.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In addition, in this application, "duration" does not mean absolute duration, and a specific engineering error may be allowed. "Distance" does not mean an absolute distance, and a specific engineering error may be allowed. A form of a time sequence diagram does not mean an absolute form, provided that the time sequence diagram has a same rising, stable, or falling trend. For example, a rising edge (or a falling edge) may be vertically rising (or falling), or may be rising (or falling) in a stepped manner, or may have a specific slope, or may have a specific arc, or the like. For another example, a status of a high level or a low level may be presented as a straight line, or may be presented as a wave change, or may be presented as a sawtooth change, or may be presented as a curve fluctuation, or the like.

FIG. 4 is a diagram of a structure of a detection component according to this application. As shown in FIG. 4, the detection component 400 includes a first detection region 410 and a second detection region 420. The first detection region 410 is used to receive a first echo signal in a first field of view, and the second detection region 420 is used to receive a second echo signal in a second field of view. The first field of view and the second field of view at least partially do not overlap. For example, the first field of view and the second field of view do not overlap at all, or the first field of view and the second field of view partially do not overlap. An example in which the first field of view and the second field of view partially do not overlap is used in the figure. For example, to distinguish from a transmit field of view, in this application, the first field of view is referred to as a first receive field of view, and the second field of view is referred to as a second receive field of view. However, it should be understood that the first field of view and the second field of view may also have other names. For example, in some scenarios, the first field of view may also be referred to as a first range, a first echo range, or a first receive range, and the second field of view may also be referred to as a second range, a second echo range, or a second receive range. This is not specifically limited in this application.

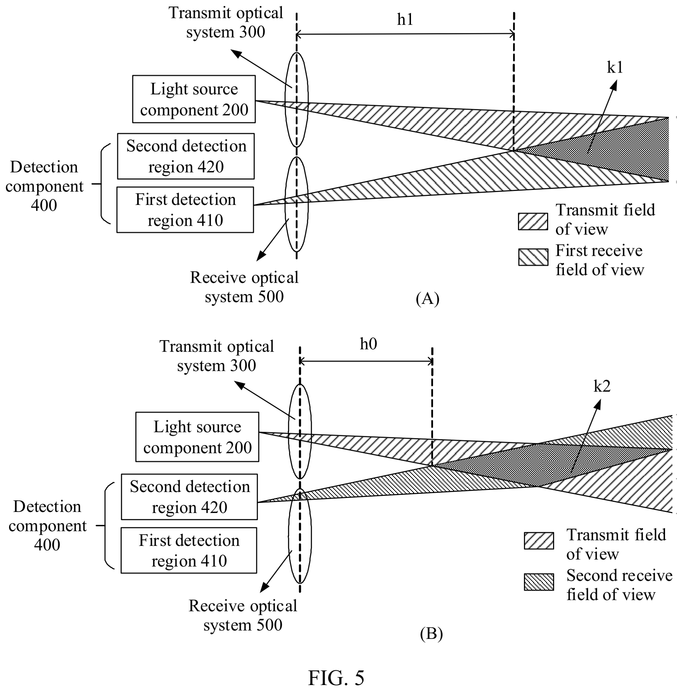

Optionally, a detection distance range of the first receive field of view is different from a detection distance range of the second receive field of view. It may be understood that a minimum detection distance in the detection distance range of the first receive field of view is greater than or less than a minimum detection distance in the detection distance range of the second receive field of view. For example, FIG. 4 shows an example in which the minimum detection distance of the first receive field of view is greater than the minimum detection distance of the second receive field of view. FIG. 5 is a diagram of an overlapping relationship between fields of view corresponding to two detection regions in the detection component shown in FIG. 4. (A) in FIG. 5 shows an overlapping relationship between the first receive field of view and the transmit field of view, and (B) in FIG. 5 shows an overlapping relationship between the second receive field of view and the transmit field of view. With reference to FIG. 4 and FIG. 5, the first receive field of view starts to overlap the transmit field of view at a long distance h1. Herein, h1 is a minimum detection distance of the first detection region 410, that is, the first detection region 410 can be used to detect some targets located at h1 and after h1. However, the second receive field of view starts to overlap the transmit field of view at a distance h0. Herein, h0 is a minimum detection distance of the second detection region 420, that is, the second detection region 420 can be used to detect some targets located at h0 and after h0. Because h0 is less than h1, a combination of the first detection region 410 and the second detection region 420 enables the detection component 400 to detect some targets located at h0 and after h0, and a blind spot distance of the detection component 400 is reduced from h1 to h0. In this way, short-range blind spot detection can be implemented.

Further, optionally, different detection distance ranges may be implemented by configuring different distances between the detection region and a light source component 200. For example, the solution shown in FIG. 4 is still used as an example, and a distance between the second detection region 420 and the light source component 200 may be configured to be less than a distance between the first detection region 410 and the light source component 200. In this way, the first receive field of view corresponding to the first detection region 410 overlaps the transmit field of view at a more backward position, and the first detection region 410 can detect a target in a longer range, and may be used as a long-range detection region. However, the second receive field of view corresponding to the second detection region 420 overlaps the transmit field of view at a more forward position, and the second detection region 420 can detect a target in a shorter range, and may be used as a blind spot detection region. Both the long-range detection region and the blind spot detection region are configurations on a receive side, and do not affect transmit and receive optical paths of a detection apparatus. In this way, an overlapping range between the receive field of view and the transmit field of view can be changed by changing a receive field of view range while avoiding an increase in stray light. This reduces a system detection blind spot.

Optionally, the first detection region 410 and the second detection region 420 may belong to different detectors, or may belong to different detection regions in a same detector. The following separately describes the two solutions in detail.

### Implementation solution 1

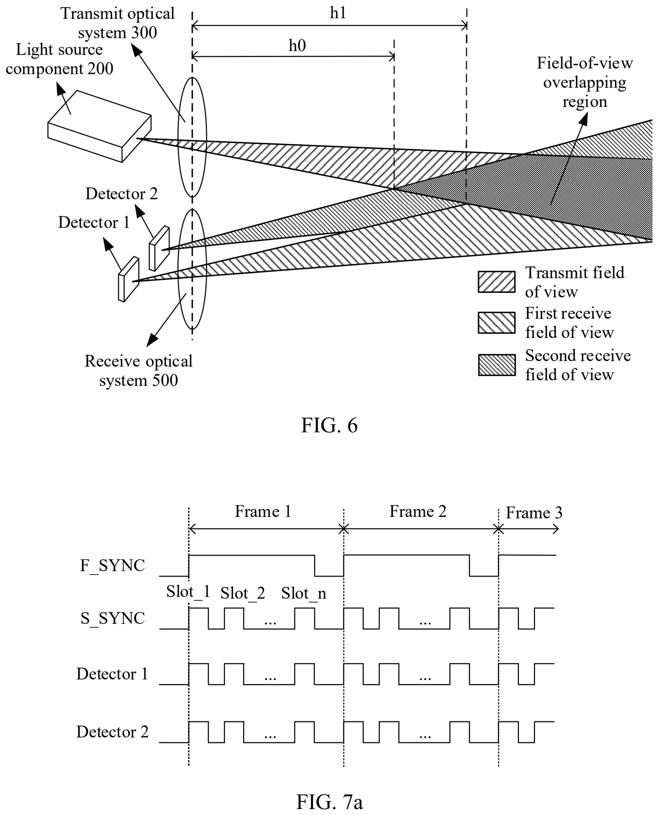

FIG. 6 is a diagram of a structure of a detection component according to an implementation solution 1. With reference to FIG. 4 and FIG. 6, the detection component 400 may include a detector 1 and a detector 2. The first detection region 410 belongs to the detector 1, and the second detection region 420 belongs to the detector 2. The detector 1 and the detector 2 are different detectors. For example, either of the detector 1 and the detector 2 may be an array detector, for example, a silicon photomultiplier (silicon photomultiplier, SiPM) or a single-photon avalanche diode (single-photon avalanche diode, SPAD), or may be a non-array detector, for example, an avalanche photodiode (avalanche photodiode, APD) or a pin photoelectric detector. This is not specifically limited.

Optionally, as shown in FIG. 6, the light source component 200 emits a first beam (for example, a laser beam, which may also be referred to as a detection signal). The first beam is shaped by a transmit optical system 300, then irradiated to targets at different distances, and reflected by the targets at different distances to constitute echo signals. The echo signals are optically processed by a receive optical system 500 and then returned to the detector 1 and the detector 2. Due to different positions of the detector 1 and the detector 2, different receive field of view ranges are constituted after the receive optical system 500 performs processing, and different overlapping regions are formed between the receive fields of view and the transmit field of view. In this way, target detection at different distances can be performed, and the detector 1 and the detector 2 complement each other. For example, in FIG. 6, the detector 2 is closer to the light source component 200 than the detector 1. The detector 1 is a main detector, and may be configured to detect a long-range target, for example, a target at a distance h1 and after h1. The detector 2 is a blind spot detector, and may be configured to detect a short-range target, for example, a target at a distance h0 and after h0. The detector 1 and the detector 2 are combined, to simultaneously implement long-range detection and short-range blind spot detection.

Further, optionally, the detector 1 and the detector 2 may use a same photosensitive chip, but correspond to different processing chips. For example, the detector 1 and the detector 2 may be disposed on a same photosensitive chip, and the detection apparatus includes a first processing chip and a second processing chip. The detector 1 is connected to the first processing chip through some electrical elements and a trace that are disposed on the photosensitive chip, and the detector 2 is connected to the second processing chip through some electrical elements and a trace that are disposed on the photosensitive chip. After the detector 1 is activated, the detector 1 may sense an echo signal in the first receive field of view and generate an electrical signal. The first processing chip processes the electrical signal and output point cloud information of a long-range target, to implement long-range target detection. After the detector 2 is activated, the detector 2 may sense an echo signal in the second receive field of view and generate an electrical signal. The second processing chip processes the electrical signal and output point cloud information of a short-range target, to implement short-range blind spot detection.

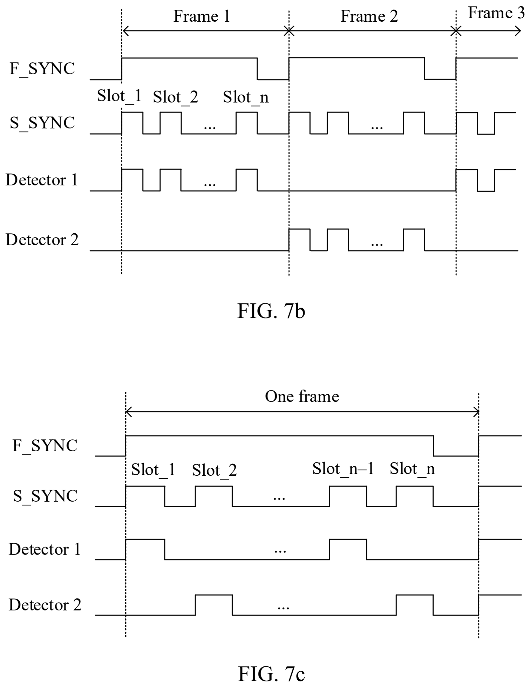

Further, optionally, the detector 1 and the detector 2 may have a plurality of activation modes. For example, FIG. 7a, FIG. 7b, and FIG. 7c are diagrams of three possible activation time sequences corresponding to the two detectors. An example in which activation is triggered by using a high level and deactivation is triggered by using a low level is used in the figures. However, it should be understood that, in some other solutions, activation may be triggered by using a low level and deactivation may be triggered by using a high level. This is not specifically limited in this application.

The following first describes some concepts in FIG. 7a to FIG. 7c.

As shown in FIG. 7a to FIG. 7c, F_SYNC is an activation time sequence in a frame. In detection duration of one frame, F_SYNC may be activated for long time, then deactivated, and lasts until the frame ends. For example, if the detection duration of one frame is 66 ms, F_SYNC may be activated in the first 44 ms and deactivated in the last 22 ms. The first 44 ms may be used to receive and sense an echo signal, and the last 22 ms is mainly reserved for the processing chip to perform echo processing. In addition, after the echo signal is received in the first 44 ms, some echo signals may be processed synchronously. In contrast to F_SYNC, S_SYNC is an activation time sequence in a slot (Slot). S_SYNC is activated periodically in a time period in which F_SYNC is activated in each frame. Duration of a period may correspond to detection in one slot. For example, it is assumed that one frame corresponds to n slots (Slot_1 to Slot_n), where n is a positive integer greater than or equal to 2. S_SYNC is activated for a period of time each time a scanning component rotates to a slot, to receive and sense an echo signal in the slot. Then, S_SYNC is deactivated. Until the scanning component rotates to another slot, S_SYNC is activated again, and is continuously cycled until detection in the n slots in the current frame is completed.

Next, the three activation modes shown in FIG. 7a to FIG. 7c are described in detail.

In an example, as shown in FIG. 7a, the detector 1 and the detector 2 may be simultaneously activated. For example, in any frame, each time the scanning component rotates to a slot, both the detector 1 and the detector 2 may be triggered to be activated by using a high level. The detector 1 is configured to detect information about a long-range target in the slot, and the detector 2 is configured to detect information about a short-range target in the slot, to implement synchronous detection of the two detectors. In this activated mode, short-range blind spot detection and long-range target detection can be simultaneously implemented.

In another example, as shown in FIG. 7b, the detector 1 and the detector 2 may be activated in different frames, for example, may be alternately activated in different frames. Single-frame alternate activation is used as an example. For example, the detector 1 may be activated in each slot in a frame 1, a frame 3, and the like, and may be deactivated in a frame 2, a frame 4, and the like. The detector 2 may be activated in each slot in the frame 2, the frame 4, and the like, and may be deactivated in the frame 1, the frame 3, and the like. In this case, the detector 1 may be configured to perform long-range detection in the frame 1, the frame 3, and the like, and the detector 2 may be configured to perform short-range blind spot detection in the frame 2, the frame 4, and the like. In this way, long-range detection and blind spot detection can be alternately implemented in different frames.

It should be noted that single-frame alternate activation is used as an example in FIG. 7b. However, it should be understood that a quantity of frames in which alternate activation is performed may be one frame or may be a plurality of frames, and quantities of frames in which alternate activation is performed may be the same or different. Single-frame alternate activation may be used as an example. For example, the detector 1 is activated in one frame, and the detector 2 is activated in one frame; the detector 1 is activated in one frame, and the detector 2 is activated in one frame; and the like. Alternatively, multi-frame alternate activation may be used an example. For example, the detector 1 is activated in two frames, and the detector 2 is activated in two frames; the detector 1 is activated in two frames, and the detector 2 is activated in two frames; and the like. Alternatively, single-frame and multi-frame combination alternate activation may be used as an example. For example, the detector 1 is activated in one frame, and the detector 2 is activated in one frame; the detector 1 is activated in two frames, and the detector 2 is activated in two frames; and the like. Alternatively, irregular alternate activation may be used as an example. For example, the detector 1 is activated in two frames, and the detector 2 is activated in one frame; the detector 1 is activated in one frame, and the detector 2 is activated in three frames; and the like. Another example is not described. There are still many possible alternate manners, and examples are not enumerated herein again.

In still another example, as shown in FIG. 7c, the detector 1 and the detector 2 may be activated in different slots in a same frame, for example, may be alternately activated in different slots. A quantity of slots in which the detectors are alternately activated may be one or more, and quantities of slots in which the detectors are alternately activated may be the same or different. Single-slot alternate activation is used as an example. For example, in any frame, the detector 1 may be activated in slots: Slot_1, Slot_3, ..., and Slot_n-1, and deactivated in slots: Slot_2, Slot_4, ..., and Slot_n; and the detector 2 may be activated in slots: Slot_2, Slot_4, ..., and Slot_n, and deactivated in slots: Slot_1, Slot_3, ..., and Slot_n-1. In this case, the detector 1 may be configured to perform long-range detection in the slots: Slot_1, Slot_3, ..., and Slot_n-1, and the detector 2 may be configured to perform short-range blind spot detection in the slots: Slot_2, Slot_4, ..., and Slot_n. In this way, long-range detection and blind spot detection can be alternately implemented in different slots in a same frame.

It may be understood that, the detector 1 and the detector 2 may further have another activation mode in addition to the activation modes shown in FIG. 7a to FIG. 7c. For example, in another activation mode, one slot may correspond to a plurality of sub-time periods, and the detector 1 and the detector 2 may be activated in different sub-time periods in one slot, for example, may be alternately activated in different sub-time periods, to alternately implement long-range detection and blind spot detection in different sub-time periods in the same slot. In addition, the activation modes in FIG. 7a to FIG. 7c may be combined to obtain another activation mode. For example, in another activation mode, the detector 1 and the detector 2 are simultaneously activated in the frame 1, alternately activated in the frame 2 and the frame 3, and alternately activated in different slots in the frame 4. For another example, in another activation mode, the detector 1 and the detector 2 are alternately activated in two frames in the frame 1 to the frame 4, simultaneously activated in a frame 5, and alternately activated in different slots in a frame 6. Another example is not described. There are many more possible activation modes, and examples are not enumerated again in this application.

Optionally, when the detector is a non-array detector, the foregoing "activate the detector" means that the detector is powered on, so that the detector can receive an optical signal and convert the optical signal into an electrical signal. When the detector is an array detector, the foregoing "activate the detector" may be understood as activating a region in which a detection unit used for readout is located in the detector. For example, for the same 100×100 detector 1 and detector 2, the detector 1 uses the 30th to 60th rows as readout rows, and the detector 2 uses the 50th to 80th rows as readout rows. In this case, activating the detector 1 may be understood as activating the 30th to 60th rows in the detector 1, and activating the detector 2 may be understood as activating the 50th to 80th rows in the detector 2. However, this is only a possible activation manner. With progress of a processing capability or a change of a readout mode, in the future, all detection units or detection units in a calibration row in the array detector may be used as readout units. Therefore, detection units activated in the detector 1 and the detector 2 may also include detection units in non-readout rows. This is not specifically limited in this application.

Further, optionally, a region in which a detection unit used for readout in the detector 2 is activated is used as an example. When an operating mode of the detection apparatus is row scanning, the light source component 400 emits a horizontal line beam, and the horizontal line beam shall be focused on one row of detection units in the detector 2 each time. It is assumed that readout rows in the detector 2 are the 30th to 60th rows, detection units in the 30th to 60th rows may be activated in each slot, to obtain information about a target in the slot based on information about echo signals on the detection units in the rows. On the contrary, when an operating mode of the detection apparatus is column scanning, the light source component 400 emits a vertical line beam, and the vertical line beam shall be focused on one column of detection units in the detector 2 each time. It is assumed that readout columns in the detector 2 are the 40th to the 70th columns, detection units in the 40th to the 70th columns may be activated in each slot, to obtain information about a target in the slot based on information about echo signals on the detection units in the columns.

In the implementation solution 1, the detector 1 may be considered as a detector in an existing separate transceiver lidar, for example, the detector shown in FIG. 1b, FIG. 3a, or FIG. 3b, and the detector 2 may be considered as a detector added to the existing separate transceiver lidar. The detector 2 is closer to the light source component 200 than the detector 1. Therefore, the second receive field of view corresponding to the detector 2 overlaps the transmit field of view at a more forward position. The detector 2 may be used as a blind spot detector, and provides short-range blind spot detection effect for the detector 1 when the detector 1 is used for detecting a long-range target. In addition, the two detectors are separately configured. Long-range detection and blind spot detection can be separately controlled only by activating or deactivating the two detectors, and there is no need to improve original structures of the detectors. Therefore, development difficulty is low.

### Implementation solution 2

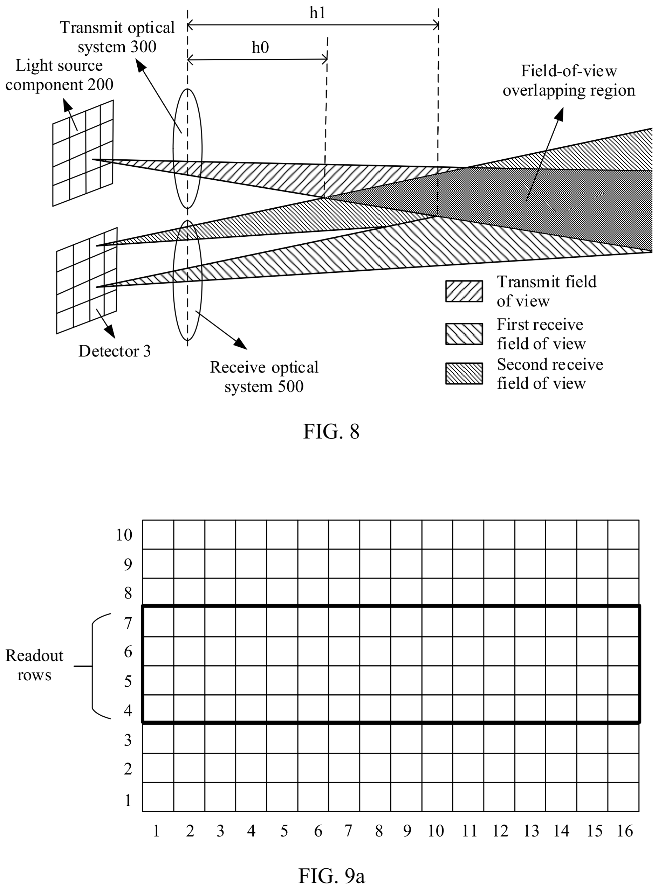

FIG. 8 is a diagram of a structure of a detection component according to an implementation solution 2. With reference to FIG. 4 and FIG. 8, the detection component 400 may include a detector 3, and a first detection region 410 and a second detection region 420 belong to different detection regions in the detector 3. For example, the detector 3 may be an array detector, for example, may include but is not limited to a SiPM or a SPAD. FIG. 8 uses an example in which the detector 3 is a 4×4 array detector, and the first detection region 410 and the second detection region 420 each occupy one of detection units. However, it should be understood that the detector 3 may alternatively be an array detector in any row and any column. The first detection region 410 may include one or more detection units in the detector 3, and the second detection region 420 may include one or more detection units in the detector 3. The two detection regions include different detection units.

Optionally, the first detection region 410 may include one or more detection units used for readout in the detector 3, and the second detection region 420 may include one or more detection units other than the detection units used for readout in the detector 3, for example, include one or more detection units used for calibration. In an existing array detector, only detection units used for readout are used to receive an echo signal. In Implementation solution 2, detection units originally used for calibration in the array detector are further used. The detection units used for calibration are also used to receive the echo signal, so that receive field of view ranges different from those of the detection units used for readout can be generated. In this way, targets at different distances are detected, and further blind spot detection for the detection units used for readout is implemented.

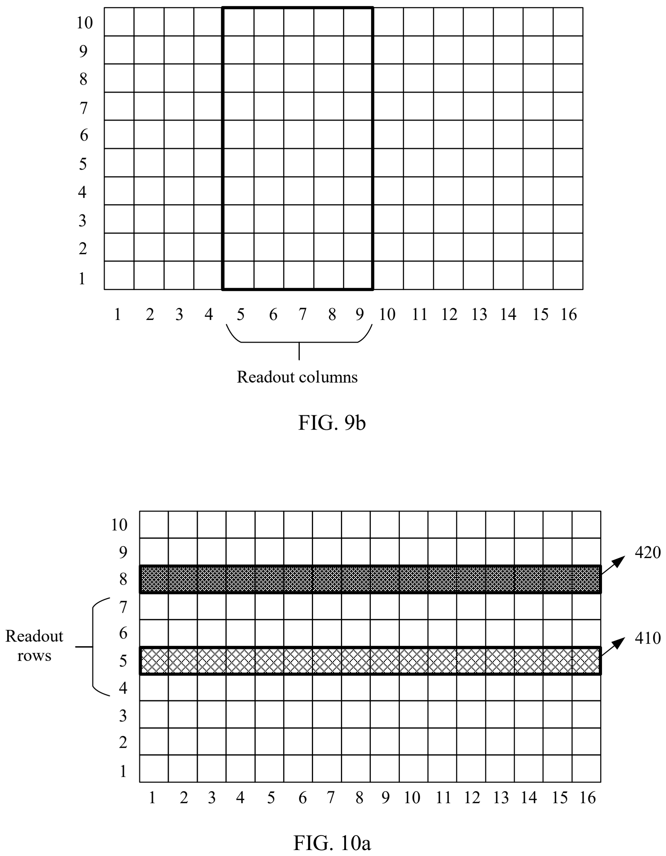

Optionally, when an operating mode of the detection apparatus is row scanning, the first detection region 410 and the second detection region 420 may be located in different rows in the detector 3. When an operating mode of the detection apparatus is column scanning, the first detection region 410 and the second detection region 420 may be located in different columns in the detector 3. For example, FIG. 9a and FIG. 9b each are diagrams of array structures of the detector 3 corresponding to a row scanning mode and a column scanning mode. The figure uses an example in which the detector 3 is a 10×16 array detector. As shown in FIG. 9a, when the detector 3 operates in the row scanning mode, if the detector 3 uses the fourth to seventh rows as readout rows, the first detection region 410 may include one or more detection units in the fourth to seventh rows, and the second detection region 420 may include one or more detection units in the first to third rows and the eighth to tenth rows. Similarly, as shown in FIG. 9b, when the detector 3 operates in the column scanning mode, if the detector 3 uses the fifth to ninth columns as readout columns, the first detection region 410 may include one or more detection units in the fifth to ninth columns, and the second detection region 420 may include one or more detection units in the first to fourth columns and the tenth to 16th columns.

Further, optionally, the second detection region 420 may be located on one side or two opposite sides of the first detection region 410. The detector 3 in the row scanning mode shown in FIG. 9a is used as an example. In an example, the second detection region 420 may include only one or more detection units in the first to third rows in the detector 3. In this case, the second detection region 420 is located on only a lower side of the first detection region 410. Alternatively, in another example, the second detection region 420 may include only one or more detection units in the eighth to tenth rows in the detector 3. In this case, the second detection region 420 is located on only an upper side of the first detection region 410. Alternatively, in still another example, the second detection region 420 includes both one or more detection units in the first to third rows in the detector 3 and one or more detection units in the eighth to tenth rows in the detector 3. In this case, the second detection region 420 is located on two opposite sides, that is, an upper side and a lower side, of the first detection region 410.

For ease of describing the solution, the following first describes, by using an example in which the detector 3 operates in the row scanning mode, a manner of disposing the first detection region 410 and the second detection region 420 on the detector 3. However, it should be understood that this application is not limited thereto. The detector 3 may alternatively operate in the column scanning mode. In this case, only the description content of the row on the detector 3 in the following needs to be replaced with a column. Details are not described again in this application.

In a possible implementation, when the detector 3 operates in the row scanning mode, either of the first detection region 410 and the second detection region 420 may occupy one row, a plurality of rows, a part of one row, or a part of each of a plurality of rows in the detector 3. The following uses several examples for description.

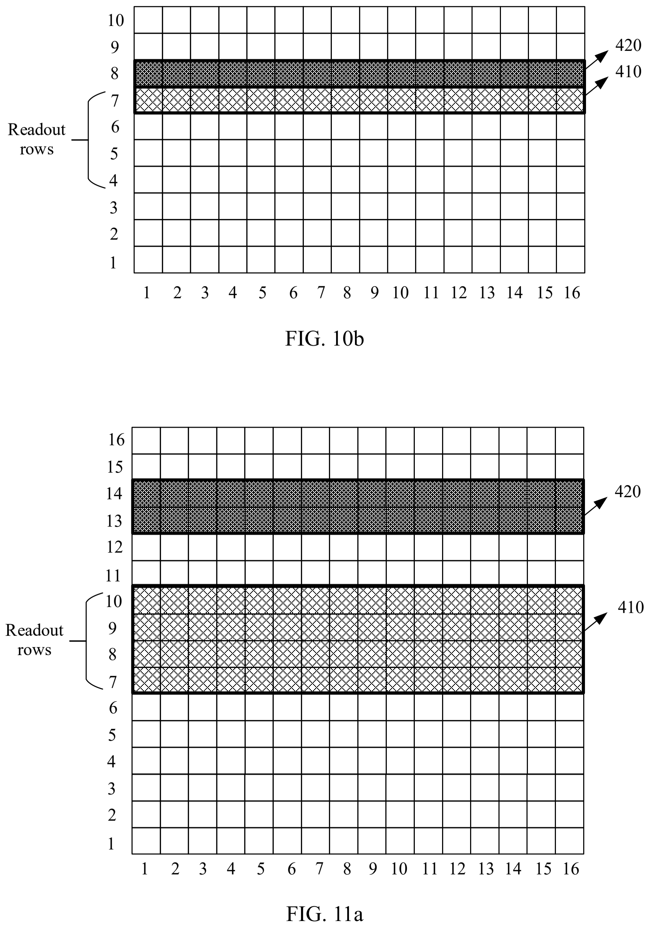

Example A1: The first detection region 410 and the second detection region 420 each occupy one row in the detector 3. For example, the first detection region 410 includes one row of detection units in readout rows, and the second detection region 420 includes one row of detection units in non-readout rows. For example, as shown in FIG. 10a and FIG. 10b, when the readout rows in the detector 3 are the fourth to the seventh rows, the first detection region 410 may include one row of detection units in the fourth row to the seventh row, for example, the fifth row of detection units shown in FIG. 10a or the seventh row of detection units shown in FIG. 10b. The second detection region 420 may include one row of detection units in the first to third rows and the eighth and tenth rows, for example, the eighth row of detection units shown in FIG. 10a or FIG. 10b.

Optionally, the first detection region 410 may be adjacent to or not adjacent to the second detection region 420. For example, in the disposing manner shown in FIG. 10a, there are several rows of detection units between the first detection region 410 and the second detection region 420, and the two detection regions are not adjacent to each other. Therefore, receive field of view ranges corresponding to the two detection regions are far away from each other, and short-range blind spot detection effect is better. However, in the disposing manner shown in FIG. 10b, the first detection region 410 is adjacent to the second detection region 420. Although there is a small difference between receive field of view ranges of the first detection region 410 and the second detection region 420, blind spot detection effect can also be implemented to some extent.

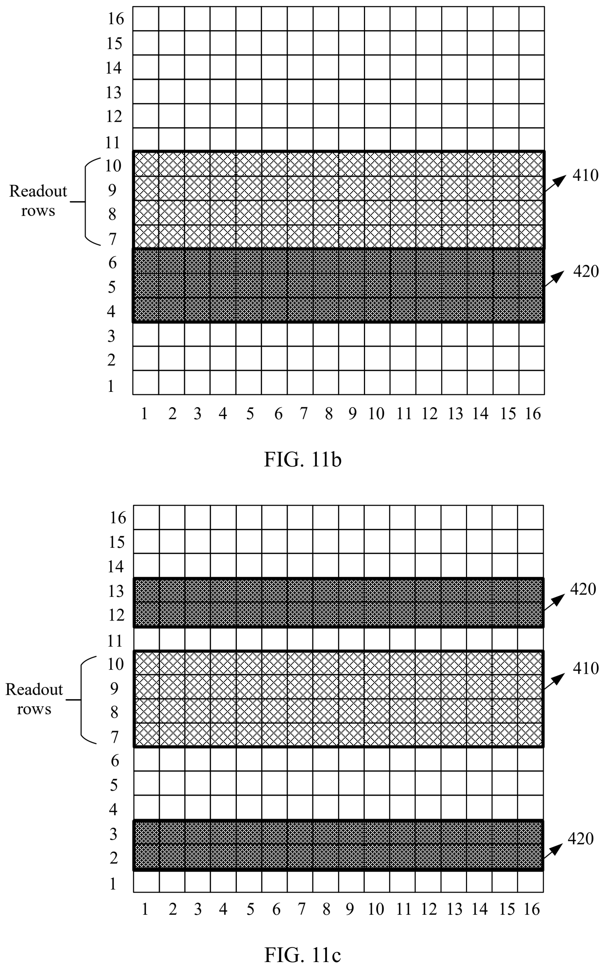

Example A2: The first detection region 410 and the second detection region 420 each occupy at least two rows in the detector 3. For example, the first detection region 410 includes at least two rows of detection units in readout rows, and the second detection region 420 includes at least two rows of detection units in non-readout rows. For example, as shown in FIG. 11a, FIG. 11b, and FIG. 11c, the first detection region 410 includes all detection units in the readout rows. When the readout rows in the detector 3 is the seventh to tenth rows, the first detection region 410 may include all detection units in the seventh to tenth rows. The second detection region 420 may include at least two rows of detection units in the first to sixth rows and the 11th to 16th rows. For example, as shown in FIG. 11a, the second detection region 420 may include only a plurality of rows of detection units that are on an upper side of the first detection region 410 and that are not adjacent to the first detection region 410. Alternatively, as shown in FIG. 11b, the second detection region 420 may include only a plurality of rows of detection units that are on a lower side of the first detection region 410 and that are adjacent to the first detection region 410. Alternatively, as shown in FIG. 11c, the second detection region 420 may include both a plurality of rows of detection units that are on an upper side of the first detection region 410 and that are not adjacent to the first detection region 410 and a plurality of rows of detection units that are on a lower side of the first detection region 410 and that are not adjacent to the first detection region 410. Another example is not described. There are many possible disposing manners, and examples are not enumerated herein again.

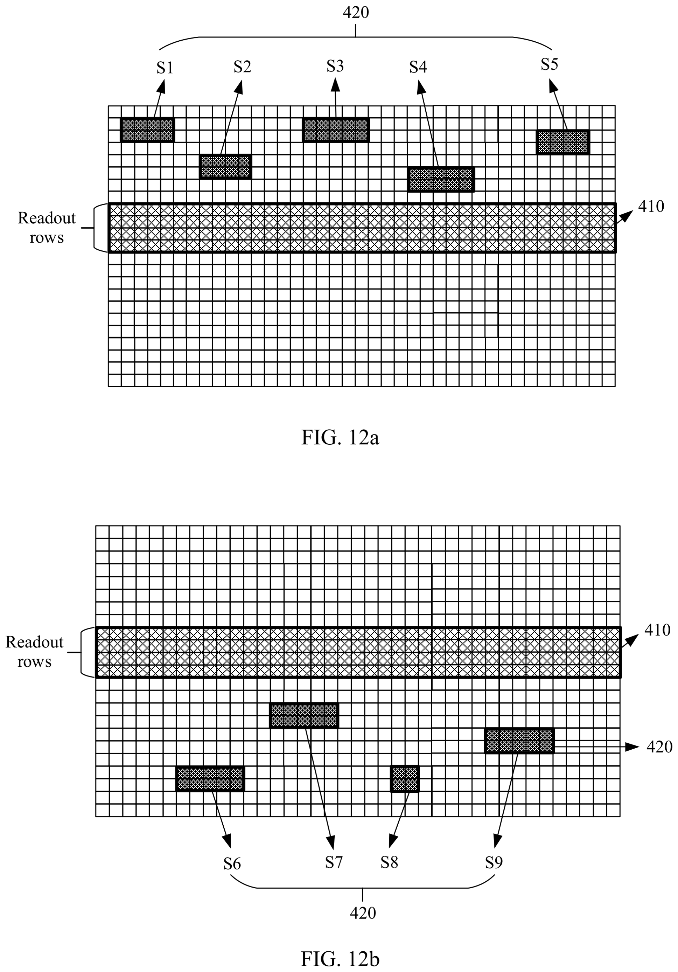

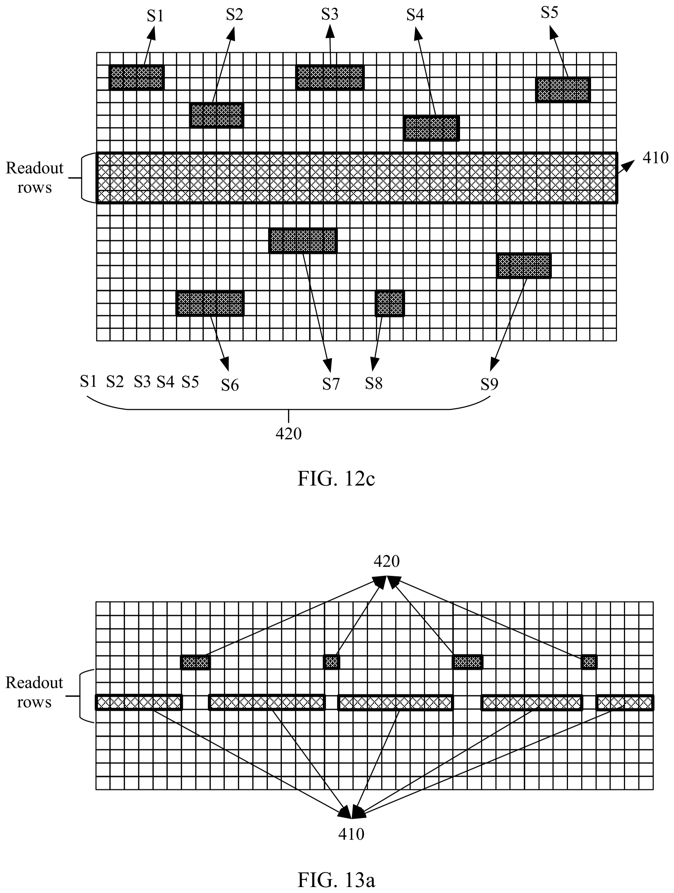

Example A3: The first detection region 410 occupies at least one row in the detector 3, and the second detection region 420 occupies a part of each row (referred to as a partial row for short) in at least one row in the detector 3. For example, the first detection region 410 includes at least one row of detection units in readout rows, and the second detection region 420 includes a part of detection units in at least one row in non-readout rows. For example, as shown in FIG. 12a, FIG. 12b, and FIG. 12c, the first detection region 410 includes all detection units in the readout rows. The second detection region 420 may include only a plurality of subregions S1 to S5 on an upper side of the first detection region 410, as shown in FIG. 12a, or may include only a plurality of subregions S6 to S9 on a lower side of the first detection region 410, as shown in FIG. 12b, or may include both a plurality of subregions S1 to S5 on an upper side of the first detection region 410 and a plurality of subregions S6 to S9 on a lower side of the first detection region 410, as shown in FIG. 12c.

Optionally, each subregion may include one or more detection units, and detection units included in the subregions do not duplicate or partially duplicate in columns. For example, in the disposing manner shown in FIG. 12a, any two of the five subregions S1 to S5 on the upper side do not duplicate in columns. In the disposing manner in FIG. 12b, any two of the four subregions S6 to S9 on the lower side also do not duplicate in columns. In this way, when the second detection region 420 is activated, only detection units in one subregion in each column are engaged in photosensitivity. This ensures accurate positioning of a readout signal in each column and adapts to the column scanning operating mode. For another example, in the disposing manner shown in FIG. 12c, although the five subregions S1 to S5 on the upper side and the four subregions S6 to S9 on the lower side each do not duplicate in columns, both the five subregions S1 to S5 and the four subregions S6 to S9 may partially duplicate in columns. For example, columns occupied by the subregion S2 on the upper side and the subregion S6 on the lower side partially duplicate, columns occupied by the subregion S3 on the upper side and the subregion S7 on the lower side partially duplicate, and columns occupied by the subregion S5 on the upper side and the subregion S9 on the lower side partially duplicate. In this disposing manner, a stronger echo signal is comprehensively detected through a combination of duplicated columns while accurate positioning of some columns is ensured, to improve echo receive efficiency.

Optionally, the plurality of subregions in the second detection unit 420 are discontinuous in columns. In other words, the second detection region 420 occupies only a length of a part of a row in the detector 3. For example, the five subregions S1 to S5 in FIG. 12a are spaced in columns, the four subregions S6 to S9 in FIG. 12b are also spaced in columns, and although the five subregions S1 to S5 on the upper side and the four subregions S6 to S9 on the lower side in FIG. 12c partially duplicate in columns, the five subregions S1 to S5 on the upper side and the four subregions S6 to S9 on the lower side are partially spaced in columns after combination. In this case, detection units used for blind spot detection do not cover all columns, and some columns are idle. In this way, processing resources in some columns can be saved while partial blind spot detection is implemented, to adapt to a limited processing capability of a processing chip.

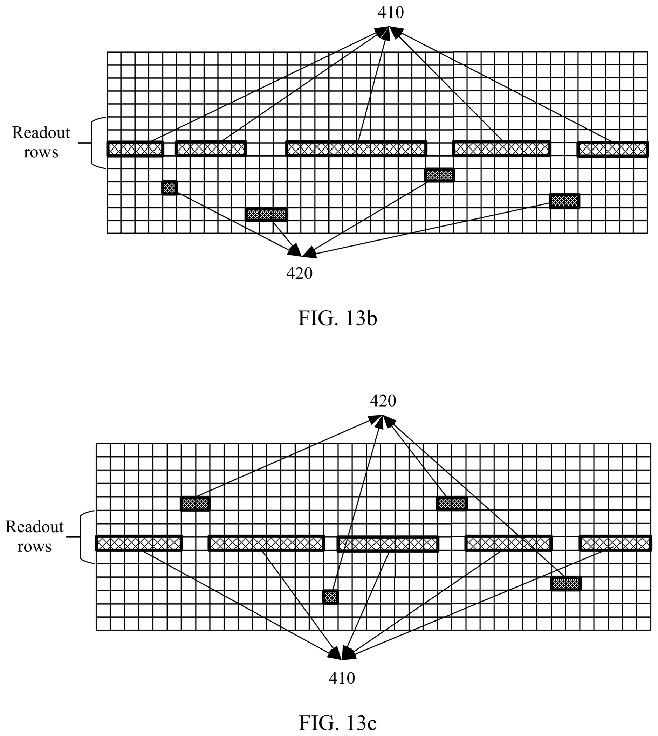

Example A4: The first detection region 410 and the second detection region 420 each occupy a part of each row in at least one row in the detector 3. The detection units in the first detection region 410 and the detection units in the second detection region 420 are located in different columns in the detector 3, and occupy a length of one row in the detector 3 in total. For example, the first detection region 410 may include a part of detection units in at least one readout row in the detector 3, the second detection region 420 may include a part of detection units in at least one non-readout row in the detector 3, and the detection unit in the first detection region 410 and the detection unit in the second detection region 420 do not duplicate in columns. For example, as shown in FIG. 13a, FIG. 13b, and FIG. 13c, the first detection region 410 includes a plurality of subregions in one readout row. The second detection region 420 may include only a plurality of subregions on an upper side of the first detection region 410, as shown in FIG. 13a, or may include only a plurality of subregions on a lower side of the first detection region 410, as shown in FIG. 13b, or may include both a plurality of subregions on an upper side of the first detection region 410 and a plurality of subregions on a lower side of the first detection region 410, as shown in FIG. 13c. The subregions in the second detection region 420 may be located in a same row or different rows. However, regardless of which disposing manner is used, the subregions in the second detection region 420 are all disposed at column positions that are missing in the subregions in the first detection region 410, so that the subregions in the first detection region 410 and the subregions in the second detection region 420 occupy a length of one row in the detector 3 in total, to ensure that only one of a detection unit used for long-range detection and a detection unit used for blind spot detection is activated in a column at a same moment, and maintain accurate positioning of a readout signal in each column.

Optionally, in the example A3 and the example A4, the second detection region 420 includes several discrete detection units far away from the first detection region 410. For example, information such as positions, a binning (binning) manner, and a quantity of the detection units, distances between these detection units and the first detection region 410, and a spacing between different detection units may be configured based on a region of interest of the detection apparatus. For example, the region of interest of the detection apparatus may be determined in advance based on a posture of the detection apparatus in an actual application scenario, and detection units corresponding to the region of interest are selected from the non-readout rows in the detector 3, to constitute the second detection region 420 through combination. In addition, the detection units included in the second detection region 420 may be dynamically updated, for example, may be updated based on an instruction of a user, or may be automatically updated based on a change of an actual application scenario. In this way, the second detection region 420 flexibly changes with a scenario change, thereby improving adaptation between blind spot detection effect and an actual application scenario.

It should be noted that the foregoing examples A1 to A4 are merely examples of introducing several possible manners of disposing the first detection region 410 and the second detection region 420. In the actual detection component 400, the first detection region 410 and the second detection region 420 may alternatively be disposed in another manner. For example, in another example, the first detection region 410 occupies a part of each row in at least one row in the detector 3, and the second detection region 420 occupies at least one row in the detector 3. For another example, in another example, the first detection region 410 occupies one row in the detector 3, and the second detection region 420 occupies at least two rows in the detector 3. For another example, in another example, the first detection region 410 and the second detection region 420 each occupy a part of each row in at least one row in the detector 3, and detection units in the first detection region 410 and detection units in the second detection region 420 partially duplicate in columns or are spaced in columns. Another example is not described. There are many possible disposing manners, and examples are not enumerated herein again.

In addition, in this application, only columns occupied by detection regions in the row scanning mode are limited, and rows occupied by the detection regions may be randomly set. For example, in the row scanning mode, rows occupied by the first detection region 410 and the second detection region 420 may completely duplicate, partially duplicate, or not duplicate at all. Similarly, in the column scanning mode, columns occupied by the first detection region 410 and the second detection region 420 may completely duplicate, partially duplicate, or not duplicate at all. This is not specifically limited in this application.

Next, activation modes of the first detection region 410 and the second detection region 420 are described.

In a possible implementation, similarly to the implementation solution 1, all or a part of detection units in the first detection region 410 and all or a part of detection units in the second detection region 420 may be simultaneously activated, or may be activated in different frames, or may be activated in different slots in a same frame, or may be activated by combining at least two of the foregoing three modes. For a specific activation time sequence, refer to the descriptions in the implementation solution 1. The following describes a specific activation procedure by using the disposing manners shown in FIG. 10a to FIG. 13c as examples.

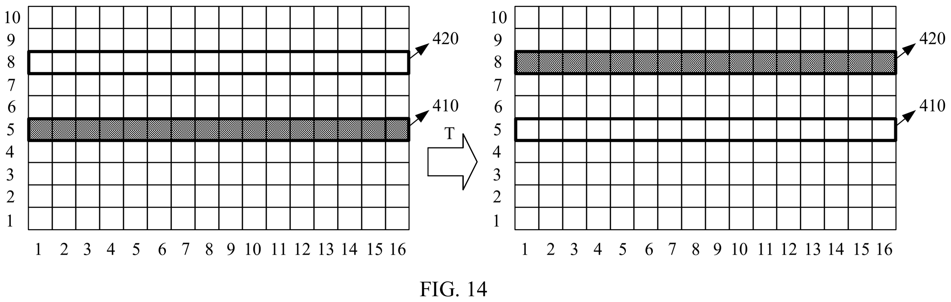

The disposing manner shown in FIG. 10a is used as an example. It is assumed that the first detection region 410 and the second detection region 420 are alternately activated in different frames or in different slots in a same frame. FIG. 14 is an activation flowchart of alternately activating two detection regions. T in the figure is an alternate period, for example, may be duration of one frame or duration of one slot. Single-frame alternate activation is used as an example. With reference to FIG. 14 and FIG. 7b, it is assumed that a detection duration in one frame is 66 ms. In a time period (for example, the first 44 ms) in which F_SYNC is activated in a frame, detection units in the fifth row corresponding to the first detection region 410 are activated as each slot (Slot) is activated, and detection units other than the detection units in the fifth row are deactivated. The detection units in the fifth row may sense, in each slot, an echo signal reflected back by a long-range target, to detect the long-range target. After the 66 ms in the frame ends, a next frame arrives. The detection units in the fifth row corresponding to the first detection region 410 are switched to be deactivated, and then the detection units in the eighth row corresponding to the second detection region 420 are activated as each slot is activated, to sense, in each slot, an echo signal reflected back by a short-range target, to detect the short-range target. The short-range target detected in the frame may be used to perform short-range blind spot detection on a detection result of a previous frame. Then, after the 66 ms in the current frame ends, the detection units in the eighth row corresponding to the second detection region 420 are switched to be deactivated, and the detection units in the fifth row corresponding to the first detection region 410 are activated as each slot (Slot) is activated. The detection units in the first detection region 410 and the detection units in the second detection region 420 are alternately activated until detection ends.

According to the activation solution in FIG. 14, all the detection units in the first detection region 410 and all the detection units in the second detection region 420 are alternately activated. When the first detection region 410 is activated, the detection units activated in the first detection region 410 occupy a length of one row in the detector 3. When the second detection region 420 is activated, the detection units activated in the second detection region 420 also occupy a length of one row in the detector 3. In this way, the first detection region 410 and the second detection region 420 are alternately activated, so that the first receive field of view and the second receive field of view can alternately operate. In this way, long-range detection and blind spot detection can be alternately implemented.

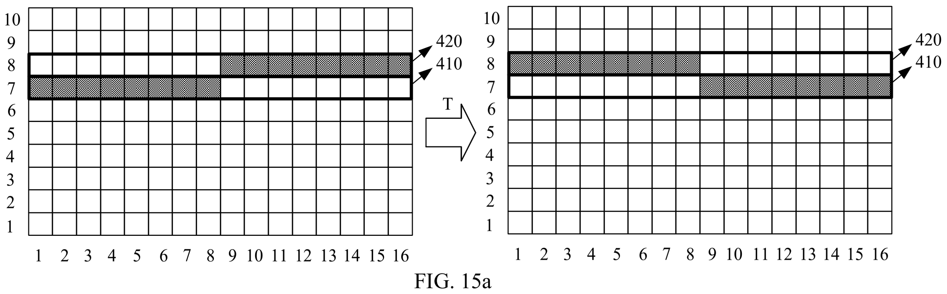

The disposing manner shown in FIG. 10b is used as another example. It is assumed that the first detection region 410 and the second detection region 420 are simultaneously activated. FIG. 15a is an activation flowchart of simultaneously activating two detection regions. In this solution, the first detection region 410 and the second detection region 420 each are divided into a left half part and a right half part. The left half part of the first detection region 410 and the right half part of the second detection region 420 are jointly activated, and the right half part of the first detection region 410 and the left half part of the second detection region 420 are jointly activated. T is a period in which the two half parts are alternately activated, for example, may be duration of one frame or duration of one slot. For example, alternate is performed once per slot. With reference to FIG. 15a and FIG. 7c, in an activation time period of one slot, the left half part of the first detection region 410 and the right half part of the second detection region 420 are activated together. The left half part of the first detection region 410 is used to sense an echo signal reflected back by a long-range target in the slot, and the right half part of the second detection region 420 is used to sense an echo signal reflected back by a short-range target in the slot, to implement short-range blind spot detection while performing long-range detection in the slot. After the activation time period of the slot ends, a next slot arrives. The left half part of the first detection region 410 and the right half part of the second detection region 420 are switched to be deactivated, and then the right half part of the first detection region 410 and the left half part of the second detection region 420 are activated together. The right half part of the first detection region 410 is used to sense the echo signal reflected back by the long-range target in the slot, and the left half part of the second detection region 420 is used to sense the echo signal reflected back by the short-range target in the slot, to implement short-range blind spot detection while performing long-range detection in the slot. Then, after a next slot arrives, the right half of the first detection region 410 and the left half of the second detection region 420 are switched to be deactivated, and the left half of the first detection region 410 and the right half of the second detection region 420 are activated again. The left half of the first detection region 410 and the right half of the second detection region 420 and the right half of the first detection region 410 and the left half of the second detection region 420 are alternately activated until detection ends.

According to the activation solution in FIG. 15a, half of the detection units in the first detection region 410 and half of the detection units in the second detection region 420 are jointly activated. During activation each time, the detection units activated in the first detection region 410 occupy a length of half a row in the detector 3, the detection units activated in the second detection region 420 also occupy a length of half a row in the detector 3, and the detection units activated in the first detection region 410 and the detection units activated in the second detection region 420 occupy a length of one row in the detector 3 in total. In this way, a part of the first detection region 410 and a part of the second detection region 420 are activated each time, so that long-range detection and blind spot detection can be simultaneously implemented.

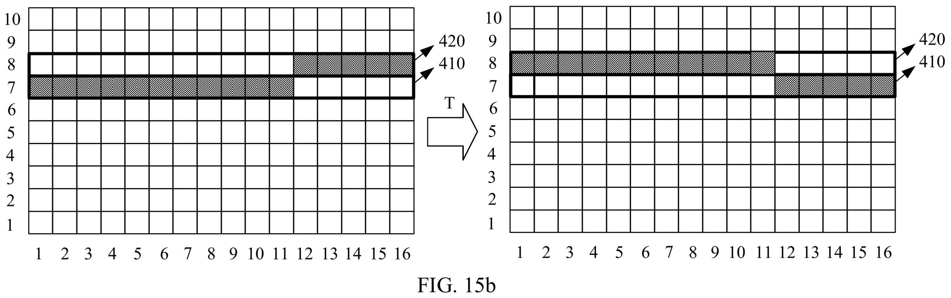

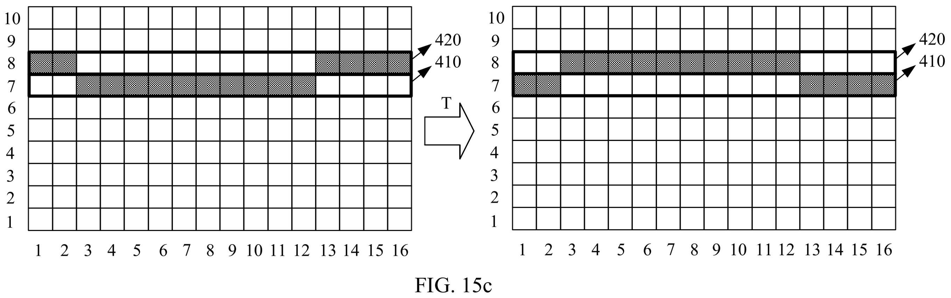

It may be understood that each detection region is divided into two parts with a same length in FIG. 15a, and this is merely an example. Any one detection region may alternatively be divided into two or more parts. Different parts may have a same length or different lengths. In another example, as shown in FIG. 15b, the first detection unit 410 and the second detection unit 420 each may be divided into two parts. However, a length occupied by one part is greater than a length of half a row in the detector 3, and a length occupied by the other part is less than a length of half a row in the detector 3. In this way, it can also be ensured that the detection units activated each time occupy the length of one row in the detector 3 by jointly activating the detection units in the long part and the detection units in the other short part. In still another example, as shown in FIG. 15c, the first detection unit 410 and the second detection unit 420 each may be divided into three parts. It can also be ensured that the detection units activated each time occupy the length of one row in the detector 3 in total by jointly activating detection units in two parts and detection units that are in the other part and that are not in a same column as the detection units in the two parts. Another example is not described. Examples are not enumerated herein again.

It should be noted that a length occupied by detection units in the detector 3 that are activated at a time may be determined based on a processing capability of a photosensitive chip. For example, the existing photosensitive chip can perform photosensitive processing on only one row of detection units in the detector each time. Therefore, to adapt to the processing capability of the photosensitive chip, in the foregoing manner, the detection units in the first detection region 410 and the detection units in the second detection region 420 that are activated each time are configured to occupy the length of one row in the detector 3. In this way, long-range detection and blind spot detection can be simultaneously implemented while the processing capability of the photosensitive chip is maximized, and the processing capability of the photosensitive chip is not exceeded, and accuracy of photosensitive processing can be ensured. However, it should be understood that with development of chip technologies or some improvement solutions for the photosensitive chip, future photosensitive chips or some existing photosensitive chips may have or have had a capability of processing more than one row of detection units. In this case, the detector may also activate detection units with a length of more than one row each time. This is not specifically limited in this application.

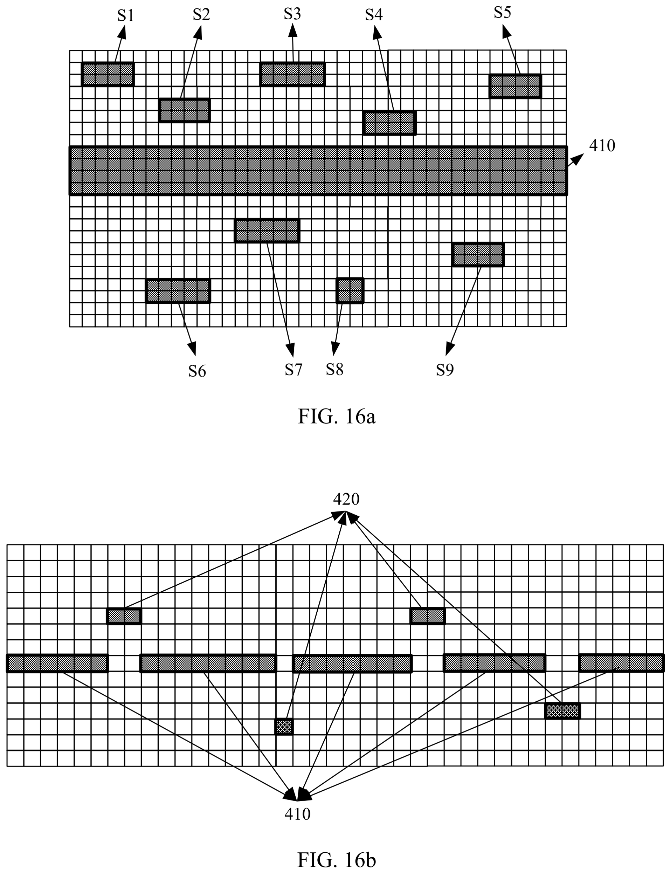

The disposing manner shown in FIG. 12c or FIG. 13c is used as still another example. It is assumed that the first detection region 410 and the second detection region 420 are simultaneously activated. FIG. 16a and FIG. 16b are activation flowcharts of simultaneously activating two detection regions in two disposing manners. With reference to FIG. 16a, FIG. 12c, and FIG. 7a, or FIG. 16b, FIG. 13c, and FIG. 7a, in an activation time period of each slot, all detection units in the first detection region 410 and all detection units in the second detection region 420 are activated together. The first detection region 410 is used to sense an echo signal reflected back by a long-range target in the slot, and the second detection region 420 is used to sense an echo signal reflected back by a short-range target in the slot, to simultaneously implement detection and blind spot detection in each slot.

According to the activation solution in FIG. 16a, during activation each time, the detection units activated in the first detection region 410 occupy a length of one row in the detector 3, and the detection units activated in the second detection region 420 occupy a length of a part of one row in the detector 3. However, according to the activation solution shown in FIG. 16b, during activation each time, the detection units activated in the first detection region 410 occupy a length of a part of one row in the detector 3, and the detection units activated in the second detection region 420 also occupy a length of a part of one row in the detector 3. The detection units activated in the first detection region 410 and the detection units activated in the second detection region 420 occupy a length of one row in the detector 3 in total. In this way, the detection units activated each time can match the processing capability of the existing photosensitive chip, thereby ensuring accuracy of performing photosensitive processing on the echo signal.

It should be noted that FIG. 14 to FIG. 16b merely show several possible activation solutions as examples. There may be other activation solutions for the first detection region 410 and the second detection region 420. For example, when the disposing manner shown in FIG. 10b, FIG. 12c, or FIG. 13c is used, the first detection region 410 and the second detection region 420 may be alternately activated in a frame or in a slot. Alternatively, when the disposing manner shown in FIG. 10a is used, the first detection region 410 and the second detection region 420 each may be divided into at least two parts, and some parts of the first detection region 410 and some parts of the second detection region 420 are combined, to simultaneously implement long-range detection and short-range blind spot detection. Another example is not described. There are many possible activation solutions, and examples are not enumerated herein again.

In the foregoing implementation solution 2, the echo signal is received by combining the non-readout detection units and the readout detection units in the array detector. The readout detection units may be used for long-range detection, and the non-readout detection units may be used for short-range blind spot detection. In this way, long-range detection and blind spot detection can be implemented by using different regions in the same detector, and there is no need to introduce a new detector. This can reduce a size and costs of the detection component.

It should be noted that, in the components and structures provided in this application, unless otherwise stated or there is a logic conflict, other possible implementation solutions may be formed through combination based on an internal logical relationship of the components and structures. The two implementation solutions provided above are merely examples. For example, in still another implementation solution, two detectors may be disposed with reference to the implementation solution 1 and the implementation solution 2. Each detector includes two detection regions. The two detectors may be simultaneously activated, activated in different frames, or activated in different slots in a same frame. When each detector is activated, the two detection regions in the detector may be simultaneously activated or alternately activated in a frame or in a slot, or the like. Alternatively, in yet another implementation solution, two detectors may be disposed, but only one detection region is disposed in one detector, and two detection regions is disposed in the other detector. Another example is not described. There are many possible implementation solutions, and examples are not enumerated herein again.

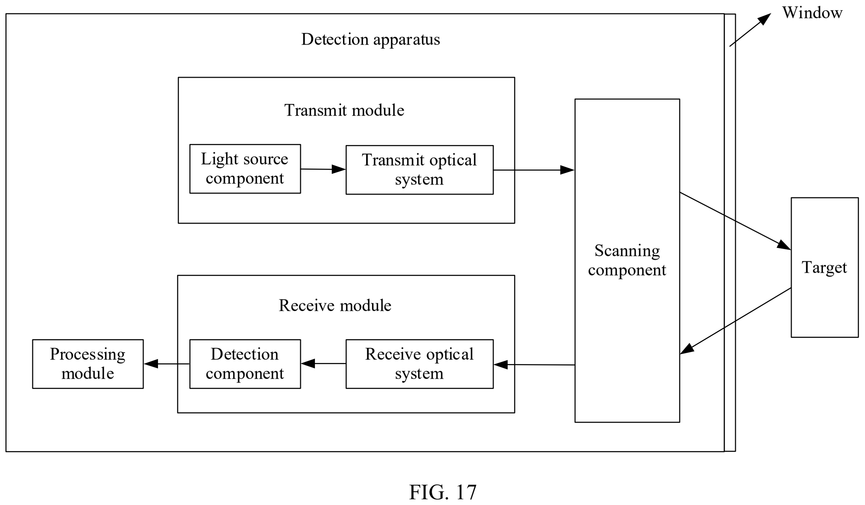

Based on the structures of the detection component described above, this application may further provide a receive module. As shown in FIG. 17, the receive module may include any detection component described above, for example, the detection component 400 in any one of the embodiments shown in FIG. 4 to FIG. 6 and FIG. 8 to FIG. 16b. The detection component may be configured to receive an echo signal in an activated state. The echo signal is an optical signal obtained after a beam emitted by a transmit module is reflected by a target in a detection region. The detection component may further convert the optical signal into an electrical signal.

Further, optionally, as shown in FIG. 17, the receive module may further include a receive optical system, for example, the receive optical system 500 in any one of the embodiments shown in FIG. 4 to FIG. 6 and FIG. 8. The receive optical system is usually also referred to as a receive lens, and may be configured to transmit, to the detection component, the echo signal reflected by the target.

Further, optionally, the receive optical system may further perform optical shaping on the echo signal, for example, beam collimation. In this way, the beam can be vertically irradiated on the detection component after being converted into collimated light. This improves energy of the beam received by the detection component.

It may be understood that the receive optical system may include a lens component, for example, a collimating lens group. For example, the receive optical system may further include another optical element, for example, a plurality of lenses. The lens may be a spherical lens (for example, a concave lens or a convex lens), or may be an aspherical lens. A combination of the plurality of spherical lenses and/or aspherical lenses helps improve quality of receiving returned light, thereby improving imaging quality and reducing aberration of an optical imaging system. It should be understood that there are a plurality of different types of convex lenses and concave lenses. For example, the convex lens includes a biconvex lens, a plano-convex lens, and a concave-convex lens, and the concave lens includes a biconcave lens, a plano-concave lens, and a concave-convex lens. Types of the convex lens and the concave lens are not limited in this application.

Further, optionally, the receive module may further include an optical transmission medium (not shown in the figure). The optical transmission medium is located between the detection component and the receive optical system, and is configured to transmit, to the detection component, the echo signal sent by the receiving optical system. The optical transmission medium may be any medium that can transmit light, for example, may include but is not limited to a fiber or a waveguide.

Based on the structure and functional principle of the receive module that are described above, this application may further provide a detection apparatus. As shown in FIG. 17, the detection apparatus may include the receive module in any one of the foregoing embodiments. Details are not described herein again.

Further, optionally, the detection apparatus may further include a transmit module. As shown in FIG. 17, the transmit module is configured to emit a beam to a detection region. Optionally, the beam emitted by the transmit module may be a line beam. For example, the transmit module may emit a horizontal line beam in a row scanning operating mode, and the transmit module may emit a vertical line beam in a column scanning operating mode.

Further, optionally, the transmit module may include a light source component and a transmit optical system. As shown in FIG. 17, the light source component is configured to emit a beam, and the transmit optical system is configured to shape the beam.

For example, the light source component may be a point light source or an array light source. The array light source may be a one-dimensional array light source (or referred to as a line array type), or may be a two-dimensional array (or referred to as a plane array type). For example, a light source in the point light source or in the array light source may include but is not limited to an edge emitting laser (edge emitting laser, EEL), a laser diode (laser diode, LD), a diode pumped solid state laser (diode pumped solid state laser, DPSS), a fiber laser, or the like.

For example, the transmit optical system may also be referred to as a transmit lens, and may include one or more lenses, for example, may include a collimating lens and a beam homogenization lens. The collimating lens may be configured to collimate a beam, and the beam homogenization lens may be configured to homogenize energy of the beam, or may be configured to change a divergence angle of the beam. Optionally, the collimating lens may be a lens that can implement a focusing function, for example, a convex lens. The convex lens may include but is not limited to a spherical lens, a cylindrical lens, or an aspherical lens. The cylindrical lens may include but is not limited to a plano-convex cylindrical mirror (or referred to as a plano-convex cylindrical lens), a plano-concave cylindrical mirror (or referred to as a plano-concave cylindrical lens), a biconvex cylindrical mirror (biconvex cylindrical lens), a biconcave cylindrical mirror (biconcave cylindrical lens), and the like. Optionally, the beam homogenization lens may be a microlens array (microlens array, MLA) a beam homogenization diffractive optical element (diffractive optical element, DOE), or the like. The MLA is an array including lenses whose optical apertures and relief depths each are at a micrometer level. The MLA has basic functions of a conventional lens, such as focusing and imaging, and is characterized by a small unit size, a high integration degree, high precision, and convenient manufacturing. The microlens array is used as a beam homogenization lens group, so that optical performance of the transmit module can be improved.

Further, optionally, the detection apparatus may further include a scanning component. As shown in FIG. 17, the scanning component may be configured to project, onto the detection region, the beam shaped by the transmit optical system. Specifically, the scanning component may be configured to change a scanning angle of the scanning component, to change a propagation direction of the beam emitted from the transmit optical system to the detection region, thereby implementing scanning on the detection region. The scanning component may be further configured to project, onto the receive optical system, the beam reflected back by the target. Specifically, the scanning component may be configured to change a scanning angle of the scanning component, to change a propagation direction of the beam reflected back by the target, so that the beam is irradiated to the receive optical system. For example, the scanning component may be one of a polyhedron (for example, an octahedron, a hexahedron, or a tetrahedron) rotating mirror, a micro electro mechanical system (micro electro mechanical system, MEMS) mirror, or a pendulum mirror. The scanning module may rotate in a continuous operating mode, or may rotate in a step operating mode. This is not limited in this application.

In a possible implementation, the scanning component may be a one-dimensional scanning component. The beam emitted by the transmit optical system is distributed in a first direction, and the scanning component may scan in a second direction, to implement two-dimensional scanning in the detection region. For example, the first direction is perpendicular to the second direction. Scanning by using the one-dimensional scanning component helps simplify a structure of the transmit module, thereby reducing complexity of the detection apparatus and improving scanning efficiency.

Further, optionally, the detection apparatus may further include a window. As shown in FIG. 17, the window may be configured to isolate impact of an external environment on an internal element of the detection apparatus.

Further, optionally, the detection apparatus may further include a processing module. As shown in FIG. 17, the processing module may be configured to control operating manners of the transmit module and the receive module, to detect the detection region. Optionally, the processing module may be configured to process the electrical signal from the receive component, to obtain association information of the target; and may further plan a driving path based on the determined association information of the target, for example, avoiding an obstacle on the path on which a vehicle is to travel, and implementing autonomous driving of the vehicle.

For example, the processing module may include one or more processing units. The processing unit may be a circuit that has a signal (or data) processing capability. In an implementation, the processing unit may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processing unit may implement a specific function based on a logical relationship of a hardware circuit. The logical relationship of the hardware circuit is fixed or reconfigurable. For example, the processing unit is an application-specific integrated circuit (application-specific integrated circuit, ASIC) or a hardware circuit, for example, a field-programmable gate array (field-programmable gate array, FPGA), implemented by a programmable logic device (programmable logic device, PLD). In the reconfigurable hardware circuit, a process in which the processing unit loads a configuration document to implement configuration of the hardware circuit may be understood as a process in which the processing unit loads instructions to implement functions of some or all of the foregoing units. In addition, the processing unit may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processing unit may be an application processor (application processor, AP), an image signal processor (image signal processor, ISP), another programmable logic device, a transistor logic device, a hardware component, or any combination thereof. Different processing units may be independent components, or may be integrated into one or more processors. For example, the detection apparatus may be a lidar.

It should be noted that the architecture of the detection apparatus provided in FIG. 17 is merely an example. In another example, the detection apparatus may include more, fewer, or different structures, and each structure may include more, fewer, or different components. The components shown or not shown may be combined or divided in any manner. This is not specifically limited in this application.

Based on the structure and function principle of the detection apparatus that are described above, this application may further provide a terminal device. The terminal device may include the detection apparatus in any one of the foregoing embodiments. For example, the terminal device may be a transportation means (for example, a car, a truck, a motorcycle, a bus, a ship, an airplane, a helicopter, a recreational vehicle, an amusement park vehicle, a construction vehicle, an electric vehicle, a golf cart, a train, an unmanned vehicle, a smart vehicle, or a digital vehicle), a robot, a surveying and mapping device, a smart home device (for example, a television, a robotic vacuum cleaner, a smart desk lamp, a sound system, a smart lighting system, an electric appliance control system, home background music, a home theater system, an intercom system, or video surveillance), a smart manufacturing device (for example, an industrial device or a lawn mower), a smart transportation device (for example, an AGV, an unmanned transport vehicle, or a lorry), or a smart terminal (for example, a mobile phone, a computer, a tablet computer, a palmtop computer, a desktop computer, a headset, a sound box, a wearable device, a vehicle-mounted device, a virtual reality device, or an augmented reality device).

In this application, "at least one" means one or more, and "a plurality of" means two or more. "And/or" describes an association between associated objects, and indicates that three relationships may exist. For example, A and/or B may indicate the following three cases: Only A exists, both A and B exist, and only B exists, where A and B may be singular or plural. "At least one of the following items (rows/pieces/columns)" or a similar expression thereof means any combination of these items, including any combination of singular items (pieces) or plural items (pieces). For example, at least one item (row/piece/column) of a, b, or c may indicate a, b, c, a and b, a and c, b and c, or a, b, and c, where a, b, and c may be singular or plural. In text descriptions of this application, the character "/" usually indicates an "or" relationship between associated objects. In addition, in this application, the terms "for example" and "optionally" are used to represent giving an example, an illustration, or a description. Any embodiment or design scheme described as an "example" or "optional" in this application shall not be construed as being more preferred or more advantageous than another embodiment or design scheme. Alternatively, it may be understood as that the word "example" or "optional" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects, but do not necessarily indicate a specific order or sequence. In addition, the terms "include", "have", and any variant thereof are intended to cover a non-exclusive inclusion, for example, include a series of steps or units. A method, system, product, or device is not necessarily limited to those steps or units expressly listed, but may include other steps or units not expressly listed or inherent to such a process, method, product, or device.

## Claims

1. A detection component, comprising a first detection region and a second detection region, wherein
the first detection region is used to receive a first echo signal in a first field of view;
the second detection region is used to receive a second echo signal in a second field of view; and
the first field of view and the second field of view at least partially do not overlap.

2. The detection component according to claim 1, wherein a detection distance range of the first field of view is different from a detection distance range of the second field of view.

3. The detection component according to claim 1 or 2, wherein a part or all of detection units in the first detection region and a part or all of detection units in the second detection region are simultaneously activated, or are activated in different frames, or are activated in different slots in a same frame.

4. The detection component according to any one of claims 1 to 3, wherein the first detection region and the second detection region belong to different detectors, or belong to different detection regions in a same detector.

5. The detection component according to claim 4, wherein the detector is any one of the following types: an avalanche photodiode APD, a pin photoelectric detector, a silicon photomultiplier SiPM, or a single-photon avalanche diode SPAD.

6. The detection component according to claim 4, wherein an operating mode of the detection component is row scanning, and the first detection region and the second detection region are located in different rows in the detector; or an operating mode of the detection component is column scanning, and the first detection region and the second detection region are located in different columns in the detector.

7. The detection component according to any one of claims 4 to 6, wherein the detection units activated in the first detection region or the second detection region occupy a length of one row or one column in the detector, or occupy a length of half a row or half a column in the detector, or occupy a length of a part of one row or a part of one column in the detector.

8. The detection component according to any one of claims 4 to 7, wherein the detection units activated in the first detection region and the detection units activated in the second detection region separately occupy one row or one column in the detector, or separately occupy half a row or half a column in the detector.

9. The detection component according to any one of claims 4 to 7, wherein the operating mode of the detection component is row scanning, the first detection region occupies one row in the detector, the second detection region occupies a part of each row in at least one row in the detector, and occupied parts do not duplicate in columns; or the operating mode of the detection component is column scanning, the first detection region occupies one column in the detector, the second detection region occupies a part of each column in at least one column in the detector, and occupied parts do not duplicate in rows.

10. The detection component according to any one of claims 4 to 7, wherein the operating mode of the detection component is row scanning, the detection units activated in the first detection region and the detection units activated in the second detection region are located in different columns, and occupy a length of one row in the detector in total; or the operating mode of the detection component is column scanning, the detection units activated in the first detection region and the detection units activated in the second detection region are located in different rows, and occupy a length of one column in the detector in total.

11. The detection component according to any one of claims 4 to 10, wherein the second detection region comprises a plurality of subregions, and the plurality of subregions are discontinuous.

12. The detection component according to any one of claims 1 to 11, wherein the second detection region is located on one side or two opposite sides of the first detection region.

13. The detection component according to any one of claims 1 to 12, wherein a quantity and positions of detection units activated in the second detection region are configured based on a region of interest.

14. A receive module, comprising the detection component according to any one of claims 1 to 13.

15. The receive module according to claim 14, further comprising a receive optical system, wherein
the receive optical system is configured to transmit an echo signal to the detection component.

16. A detection apparatus, comprising the receive module according to claim 14 or 15.

17. The detection apparatus according to claim 16, further comprising a transmit module, wherein
the transmit module is configured to transmit a detection signal.

18. The detection apparatus according to claim 16 or 17, further comprising a processing module, wherein
the processing module is configured to process the echo signal to obtain association information of a target.

19. A terminal device, comprising the detection apparatus according to any one of claims 16 to 18.
